# NEUE EUROPÄISCHE PATENTSCHRIFT

(11) **EP 3 053 149 B2**
(45) Veröffentlichungstag und Bekanntmachung des Hinweises auf die Entscheidung über den Einspruch: **07.10.2020**
(45) Hinweis auf die Patenterteilung: 22.11.2017
(21) Anmeldenummer: 14808969.1
(22) Anmeldetag: 04.12.2014
(51) Int. Cl.: G07C 9/00

(54) **ZEITSYNCHRONISATION**
TIME SYNCHRONIZATION
SYNCHRONISATION DANS LE TEMPS

(30) Priorität: 05.12.2013 DE 102013113554; 11.04.2014 DE 102014105249
(43) Veröffentlichungstag der Anmeldung: 10.08.2016
(73) Patentinhaber: Deutsche Post AG, 53113 Bonn (DE)
(72) Erfinder: CARSTENS, Christian, 53578 Windhagen (DE); DAUTZ, Christoph, 53225 Bonn (DE); JANSEN, Jochen, 53113 Bonn (DE); BENZ, Ramin, 53229 Bonn (DE); DMITRIENKO, Alexandra, 64297 Darmstadt (DE); BULYGIN, Stanislav, 70794 Filderstadt (DE); LIPPERT, Marcus, 64319 Pfungstadt (DE)
(74) Vertreter: Cohausz & Florack
(86) Internationale Anmeldenummer: PCT/EP2014/076568
(87) Internationale Veröffentlichungsnummer: WO 2015/082615

(56) Entgegenhaltungen:
- EP-A1- 0 698 706
- EP-A1- 2 595 341
- EP-A2- 1 277 632
- DE-A1- 10 202 802
- US-A- 5 397 884
- US-A1- 2006 248 596
- "ntpd(8) - Linux man page", Version vom 13-11-2013 [gefunden 21-08-2018], Fundstelle: Internet Archive Website WayBackMachine mit der Eingabe "Linux.die.net/man", und einer Suche für den "name" "ntpd" mit dem Datum 13-11-2013

## Beschreibung

### Gebiet

Beispielhafte Ausführungsformen der Erfindung betreffen ein Verfahren zur Synchronisation einer Uhr einer ersten Vorrichtung sowie eine entsprechende Vorrichtung und ein entsprechendes Computerprogramm. Beispielhafte Ausführungsformen der Erfindung betreffen insbesondere die Synchronisation einer Uhr einer Zugangskontrollvorrichtung durch von einer tragbaren elektronischen Vorrichtung kommunizierter zeitlicher Information.

### Hintergrund

Zugangskontrollvorrichtungen finden in vielerlei Hinsicht Anwendung, beispielsweise zur Kontrolle des Zugangs von Personen zu Räumen eines Gebäudes, wie es beispielsweise bei Hotels, Bürokomplexen oder Laboren der Fall ist, zu Veranstaltungen oder auch in abstrakter Form zu Funktionen, Ressourcen oder Diensten, beispielsweise von Computerfunktionen oder -ressourcen oder Serverdiensten.

Eine spezifische Anwendung von Zugangskontrollvorrichtungen bildet auch die Kontrolle des Zugangs von Personen zu Öffnungen von Behältern, wie z.B. Schließfächern oder Warenzustellungsbehältern, insbesondere von Paketkästen. Paketkästen ermöglichen eine neuartige Form der Zustellung/Abholung von Paketen für Personen, die Pakete auch in Abwesenheit an oder in der Nähe ihres Wohnsitzes empfangen oder versenden wollen. Dazu werden Paketkästen üblicherweise vor dem Wohnsitz des Paketkastennutzers - ähnlich einem Briefkasten, aber mit größerem Fassungsvolumen - installiert und Pakete dann vom Zusteller durch Einlegen in den Paketkasten zugestellt oder durch Herausnehmen aus dem Paketkasten abgeholt. Um Missbrauch und Diebstahl zu verhindern, muss der Paketkasten über ein Schloss verfügen. Sowohl der Zusteller als auch der Paketkastennutzer müssen dann mit physikalischen oder elektronischen Schlüsseln ausgestattet werden, um den Paketkasten benutzen zu können. Die elektronischen Schlüssel können beispielsweise als Datensätze auf sog. Token gespeichert sein, beispielsweise auf Mobiltelefonen oder RFID-Tags.

### Zusammenfassung einiger beispielhafter Ausführungsformen der Erfindung

Es ist grundsätzlich wünschenswert, dass bei Verwendung von elektronischen Schlüsseln die Gültigkeitsdauer dieser Schlüssel begrenzt werden kann, damit die elektronischen Schlüssel nach Ablauf der vereinbarten oder zugestandenen Nutzungszeit nicht missbräuchlich weiter verwendet werden können. Zu diesem Zweck können elektronische Schlüssel beispielsweise ein oder mehrere Zugangsberechtigungsparameter umfassen, die die Zeitdauer definieren, während der Schlüssel zur Bedienung eines Schlosses genutzt werden kann. Für die im Rahmen der Zugangsberechtigungsprüfung vorgenommene Prüfung, ob diese Zeitdauer noch nicht abgelaufen ist, benötigt das Schloss eine Uhr. Insbesondere Uhren von batteriebetriebenen Schlössern weisen allerdings nicht unerhebliche Sollzeitabweichungen, beispielsweise in der Größenordnung von einigen Minuten pro Monat, auf, so dass zur Sicherstellung des Gleichlaufs der Uhr eines Schlosses und der Uhr einer Vorrichtung, die die Zugangsberechtigungsparameter, die die Zeitdauer der Nutzung des Schlüssels definieren, erzeugt, Möglichkeiten zur Synchronisation der Uhr des Schlosses vorgesehen werden müssen.

Die Erfinder haben darüber hinaus erkannt, dass im Rahmen der Synchronisation von Uhren von Zugangskontrollvorrichtungen nicht unerhebliche Manipulationsmöglichkeiten bestehen, die von einem Angreifer ausgenutzt werden könnten, um sich unberechtigten Zugang zu verschaffen. Insbesondere könnte versucht werden, einen bereits in zeitlicher Hinsicht abgelaufenen Schlüssel wieder zu reaktivieren, indem die Uhr des Schlosses auf eine (falsche) Zeit synchronisiert wird, die in dem bereits abgelaufenen Nutzungsintervall des Schlüssels liegt.

Die EP 0 698 706 A1 offenbart, dass eine empfangene zeitliche Information zur Synchronisation einer Uhr verwendet werden darf, wenn sie sich weniger als von einer Schwelle vorgegeben von der zeitlichen Information der Uhr unterscheidet.

Die vorliegende Erfindung hat sich daher die Aufgabe gestellt, diese Probleme zu überwinden und eine sichere Möglichkeit zur Synchronisation von Uhren mit Sollzeitabweichungen bereitzustellen.

Gemäß einem ersten Aspekt der Erfindung wird ein Verfahren, durchgeführt durch eine erste Vorrichtung, offenbart, das folgendes umfasst:
- Erhalten von an die erste Vorrichtung kommunizierter zeitlicher Information, und
- Durchführen, nach dem Erhalten der an die erste Vorrichtung kommunizierten zeitlichen Information, von einer oder mehreren der folgenden Prüfungen:
   - einer Prüfung, ob sich die erste Vorrichtung in einem Zustand nach erstmaliger Inbetriebnahme, nach einem Batteriewechsel oder nach einem Reset befindet, wobei bei der Prüfung anhand von Information betreffend eine bereits erfolgte Synchronisation entschieden wird, ob sich die erste Vorrichtung in einem Zustand nach erstmaliger Inbetriebnahme, nach einem Batteriewechsel oder sonstigen Stromausfall oder nach einem Reset befindet,
   - einer Prüfung, ob eine Abweichung zwischen einer zeitlichen Information einer Uhr der ersten Vorrichtung und der kommunizierten zeitlichen Information kleiner oder kleiner-oder-gleich ist als ein vordefinierter oder nach einer vordefinierten Regel bestimmter Schwellwert,
   - einer Prüfung, ob die kommunizierte zeitliche Information das gleiche Datum aufweist wie die zeitliche Information der Uhr der ersten Vorrichtung,
- Synchronisieren der Uhr der ersten Vorrichtung unter Verwendung der kommunizierten zeitlichen Information, falls alle von einer oder mehreren vordefinierten Bedingungen erfüllt sind, wobei eine der einen oder mehreren Bedingungen erfordert, dass zumindest eine der einen oder mehreren durchgeführten Prüfung(en) ein positives Ergebnis ergeben hat, wobei die eine oder die mehreren durchgeführte(n) Prüfung(en) zumindest die Prüfung, ob sich die erste Vorrichtung in einem Zustand nach erstmaliger Inbetriebnahme, nach einem Batteriewechsel oder sonstigen Stromausfall oder nach einem Reset befindet, umfasst.

Gemäß jedem Aspekt der Erfindung werden des Weiteren jeweils offenbart:
- Ein Computerprogramm, umfassend Programmanweisungen, die einen Prozessor zur Ausführung und/oder Steuerung des Verfahrens gemäß dem jeweiligen Aspekt der Erfindung veranlassen, wenn das Computerprogramm auf dem Prozessor läuft. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder ein oder mehrere Schritte gesteuert und ein oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, elektro-magnetischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon.
- Eine Vorrichtung, eingerichtet zur Ausführung und/oder Steuerung des Verfahrens gemäß dem jeweiligen Aspekt der Erfindung oder umfassend jeweilige Mittel zur Ausführung der Schritte des Verfahrens gemäß dem jeweiligen Aspekt der Erfindung. Dabei können entweder alle Schritte des Verfahrens gesteuert werden, oder alle Schritte des Verfahrens ausgeführt werden, oder ein oder mehrere Schritte gesteuert und ein oder mehrere Schritte ausgeführt werden. Ein oder mehrere der Mittel können auch durch die gleiche Einheit ausgeführt und/oder gesteuert werden. Beispielsweise können ein oder mehrere der Mittel durch einen oder mehrere Prozessoren gebildet sein.
- Eine Vorrichtung, die zumindest einen Prozessor und zumindest einen Speicher, der Programmcode beinhaltet, umfasst, wobei der Speicher und der Programmcode eingerichtet sind, die Vorrichtung mit dem zumindest einen Prozessor dazu zu veranlassen, zumindest das Verfahren gemäß dem jeweiligen Aspekt der Erfindung auszuführen und/oder zu steuern. Dabei können entweder alle Schritte des Verfahrens gesteuert werden, oder alle Schritte des Verfahrens ausgeführt werden, oder ein oder mehrere Schritte gesteuert und ein oder mehrere Schritte ausgeführt werden.

Der erste Aspekt der Erfindung findet beispielsweise Anwendung in einem System zur Zustellung und/oder Abholung von Sendungen.

Der erste Aspekt der vorliegenden Erfindung weist u.a. die nachfolgend beschriebenen - teilweise beispielhaften - Eigenschaften auf.

Bei dieser ersten Vorrichtung kann es sich beispielsweise um eine Zugangskontrollvorrichtung oder einen Teil davon handeln. An einer Zugangskontrollvorrichtung wird eine Zugangskontrolle durchgeführt, beispielsweise wird der Zugang zu Räumen von Gebäuden (z.B. Hotels, Bürokomplexe, Labore) oder Vorrichtungen, zu Veranstaltungen (z.B. Konzerte, Sportveranstaltungen), zu Funktionen (beispielsweise eines Computers, z.B. über ein Login), zu Ressourcen oder zu Diensten (beispielsweise zu einem von einem Server bereitgestellten Dienst, z.B. Online-Banking, Soziale Netzwerke, Emailkonten) kontrolliert. Beispiele des Zugangs zu Räumen von Vorrichtungen sind der Zugang zu Aufnahmeräumen von Aufnahmevorrichtungen, wie z.B. Schließfächern, Spinden, Kühlschränken, Warenzustellbehältern, Briefkästen, Paketkästen oder kombinierten Brief- und Paketkästen, die beispielsweise jeweils mit Türen verschlossen und durch Schließeinrichtungen gesichert sind.

Bei der Zugangskontrollvorrichtung kann es sich beispielsweise um ein oder mehrere Prozessoren handeln, die eine oder mehrere Schließeinrichtungen, beispielsweise ein elektronisch ansteuerbares Schloss, steuern, und somit beispielsweise ein Öffnen und/oder Schließen des Schlosses bewirken können. Das Schloss kann beispielsweise mit einer Fallenfunktion ausgestattet sein, so dass die Zugangskontrollvorrichtung beispielsweise nur eine Öffnung des Schlosses (beispielsweise durch ein zumindest zeitweises Überführen der Falle in eine OffenStellung, beispielsweise durch einen elektrischen Motor) steuern muss, während ein Schließen des Schlosses manuell durch einen Nutzer geschieht, indem dieser die Fallenfunktion nutzt und beispielsweise durch Zudrücken einer Tür die Falle aus der Zu-Stellung in die OffenStellung verdrängt und nach dem Beenden des Zudrückens die Falle automatisch wieder in die Zu-Stellung zurückkehrt, beispielsweise durch Federvorbelastung.

Die Zugangskontrollvorrichtung kann auch die Schließeinrichtungen und weitere Komponenten umfassen. Die Zugangskontrollvorrichtung kann Bestandteil einer Vorrichtung sein, zu der sie den Zugang kontrolliert, beispielsweise einer Aufnahmevorrichtung. Die Zugangskontrollvorrichtung kann beispielsweise batteriebetrieben sein und beispielsweise über keinen insbesondere ständigen Stromanschluss verfügen.

Die erste Vorrichtung kann beispielsweise derart eingerichtet sein, dass sie im Betrieb aus schließlich zur Kommunikation mit zweiten Vorrichtungen (z.B. Zugangsberechtigungsnachweisvorrichtungen) eingerichtet ist (insbesondere zum Erhalten der zeitlichen Information), und beispielsweise nicht zur Kommunikation mit einer dritten Vorrichtung (z.B. einer Zugangsberechtigungserzeugungsvorrichtung) eingerichtet ist. Die erste Vorrichtung verfügt beispielsweise über keinen Anschluss an ein Mobilfunknetz, ein Local Area Network (LAN), ein Wireless Local Area Network (WLAN) oder das Internet, sie stellt damit also beispielsweise eine "offline"-Vorrichtung dar. Die drahtlose Kommunikation der ersten Vorrichtung kann beispielsweise auf Kommunikation mit Vorrichtungen in der näheren Umgebung der ersten Vorrichtung (beispielsweise weniger als 100 m) eingerichtet sein. Die drahtlose Kommunikation der ersten Vorrichtung kann beispielsweise auf Kommunikation mittels Radio Frequency Identification (RFID) und/oder Near Field Communication (NFC) und/oder Bluetooth (z.B. Bluetooth Version 2.1 und/oder 4.0) beschränkt sein. RFID und NFC- sind beispielsweise gemäß den ISO-Standards 18000, 11784/11785 und dem ISO/IEC-Standard 14443-A und 15693 spezifiziert. Die Bluetooth-Spezifikationen sind unter www.bluetooth.org erhältlich. Die erste Vorrichtung kann nichtsdestotrotz beispielsweise über eine Universal Serial Bus (USB) Schnittstelle verfügen, über die die erste Vorrichtung beispielsweise gewartet werden kann.

An der ersten Vorrichtung wird kommunizierte zeitliche Information erhalten. Die zeitliche Information wird insbesondere von einer zweiten Vorrichtung an die erste Vorrichtung kommuniziert (z.B. gesendet oder übertragen, z.B. mittels drahtloser Übertragung, insbesondere mittels Bluetooth). Die zeitliche Information kann beispielsweise ein von einer Uhr der zweiten Vorrichtung angegebenes aktuelles Datum und die aktuelle Uhrzeit sein oder ein dafür repräsentativer Wert, beispielsweise ein seit einem vordefinierten Datum laufender Zähler, wie beispielsweise die Unixzeit, die die Anzahl der Sekunden seit dem 1. Januar 1970 00:00 Uhr UTC angibt. Die zeitliche Information kann beispielsweise eine Granularität von Sekunden, Minuten, Stunden oder lediglich Tagen aufweisen. Die Uhr der ersten Vorrichtung kann auf diese Weise einfach synchronisiert werden und muss deshalb keine besonders hohe Genauigkeit aufweisen oder als Funkuhr ausgebildet sein. Allerdings kann beispielsweise die Uhr der zweiten Vorrichtung als Funkuhr ausgebildet sein. Alternativ kann die Uhr der zweiten Vorrichtung beispielsweise von einer weiteren Vorrichtung synchronisiert werden, z.B. mittels drahtlos oder drahtgebunden an die zweite Vorrichtung übertragener Informationen. Die weitere Vorrichtung kann dann beispielsweise über eine Funkuhr verfügen. Die zeitliche Information kann beispielsweise zusammen mit Zugangsberechtigungsinformation an die erste Vorrichtung kommuniziert werden, wie unten noch weiter ausgeführt werden wird, beispielsweise zumindest in der gleichen Kommunikationssitzung.

Ein Synchronisieren der Uhr der ersten Vorrichtung kann unter Verwendung der (erhaltenen) kommunizierten zeitlichen Information durchgeführt werden, beispielsweise durch Übernahme der kommunizierten zeitlichen Information als neue zeitliche Information der Uhr der ersten Vorrichtung. Das Synchronisieren ist allerdings an Bedingungen geknüpft, um ein missbräuchliches Synchronisieren auf einen falschen Zeitpunkt zu unterbinden. Daher wird erfindungsgemäß gefordert, dass das Synchronisieren der Uhr der ersten Vorrichtung (insbesondere nur dann) ausgeführt wird, falls alle Bedingungen von einer oder mehreren vordefinierten Bedingungen erfüllt sind. Es kann beispielsweise also lediglich eine Bedingung vordefiniert sein, oder mehrere, aber in beiden Fällen müssen dann jeweils alle der vordefinierten Bedingungen erfüllt sein. Eine der einen oder mehreren vordefinierten Bedingungen (eine weitere Bedingung wird weiter unten diskutiert) erfordert, dass eine Prüfung von einer oder mehreren durchgeführten Prüfungen ein positives Ergebnis ergeben hat (also die mit der Prüfung verbundene Frage zu bejahen ist). Es kann lediglich eine Prüfung durchgeführt werden, oder es können mehrere Prüfungen durchgeführt werden. Unabhängig davon, wie viele Prüfungen durchgeführt werden, muss allerdings zumindest eine dieser Prüfungen ein positives Ergebnis aufweisen, damit die eine der einen oder mehreren Bedingungen erfüllt ist.

Zu der/den einen oder mehreren Prüfung(en) zählen insbesondere die folgenden Prüfungen, die zur Vereinfachung der Diskussion durchnummeriert werden, was allerdings keine bevorzugte oder etwa vorgeschriebene Reihenfolge der Prüfung indizieren soll:
- eine erste Prüfung, ob sich die erste Vorrichtung in einem Zustand nach erstmaliger Inbetriebnahme, nach einem Batteriewechsel oder sonstigem Stromausfall oder nach einem Reset befindet,
- eine zweite Prüfung, ob eine Abweichung zwischen einer zeitlichen Information der Uhr und der kommunizierten zeitlichen Information kleiner oder kleiner-oder-gleich ist als ein vordefinierter oder nach einer vordefinierten Regel bestimmter Schwellwert,
- eine dritte Prüfung, ob die kommunizierte zeitliche Information das gleiche Datum aufweist wie die zeitliche Information der Uhr.

Hier bezeichnet die Notation "kleiner-oder-gleich" die bekannte Relation "≤".

Die zweite und dritte Prüfung stellen beispielsweise Alternativen zueinander dar, die beispielsweise im laufenden Betrieb der ersten Vorrichtung (also beispielsweise nicht unmittelbar nach einer ersten Inbetriebnahme, einem Batteriewechsel (od. sonstigen Stromausfall) oder einem Reset, sondern beispielsweise nachdem eines dieser Ereignisse und zumindest eine Synchronisation nach diesem Ereignis erfolgt ist) angewendet werden, um zu verhindern, dass die Uhr der ersten Vorrichtung durch das Synchronisieren in einem potentiell missbräuchlichen Umfang, der größer ist als die zu erwartende Sollzeitabweichung der Uhr, verstellt wird. Die erste Prüfung ist hingegen für Situationen zugeschnitten, in denen notwendig größere Abweichungen zwischen der Uhr der ersten Vorrichtung und der kommunizierten zeitlichen Information auftreten, beispielsweise nach einer ersten Inbetriebnahme, einem Batteriewechsel (oder sonstigen Stromausfall) oder einem Reset. Wenn die Uhr der ersten Vorrichtung bei derartigen Ereignissen beispielsweise auf einen Standardzeitpunkt eingestellt wird oder auf den (gespeicherten) Zeitpunkt der letzten Synchronisation und dann ab diesem Standardzeitpunkt oder Zeitpunkt zu laufen beginnt, besteht eine hohe Wahrscheinlichkeit, dass bei einem nachfolgenden Synchronisationsversuch die kommunizierte zeitliche Information stark von der zeitlichen Information der Uhr der ersten Vorrichtung abweicht. Um in diesen Sonderfällen dennoch eine (initiale) Synchronisation zu ermöglichen, wird daher zugelassen, dass eine Synchronisierung erfolgen darf. Optional kann hier allerdings die weitere Auflage auferlegt werden, dass die Synchronisierung die zeitliche Information der Uhr der ersten Vorrichtung nur in Richtung der Zukunft, und nicht in Richtung der Vergangenheit verstellen darf, wie weiter unten noch ausgeführt werden wird. Dies trägt der Annahme Rechnung, dass der Standardzeitpunkt oder der Zeitpunkt der letzten Synchronisation gegenüber der Zeitpunkt, an dem das Ereignis auftritt, üblicherweise in der Vergangenheit liegen wird.

Bei der ersten Prüfung kann beispielsweise anhand von Information betreffend eine bereits erfolgte Synchronisation entschieden werden, ob sich die erste Vorrichtung in einem Zustand nach erstmaliger Inbetriebnahme, nach einem Batteriewechsel oder sonstigem Stromausfall oder nach einem Reset befindet. Beispielsweise kann derartige Information bei einer erstmaligen Inbetriebnahme noch nicht in der ersten Vorrichtung gespeichert sein und/oder nach Ereignissen wie einem Batteriewechsel oder sonstigem Stromausfall oder einem Reset in der ersten Vorrichtung gelöscht werden, selbst wenn sie vorhanden war. Dabei kann es sich lediglich um ein gesetztes Bit (oder Register) handeln, das anzeigt, das zumindest eine Synchronisation bereits erfolgt ist, oder um eine ausführlichere Information, die beispielsweise die Anzahl der bereits erfolgten Synchronisationen zählt und/oder Informationen zu der jeweiligen Synchronisation (z.B. mit Zeitstempel) abspeichert. Durch die Prüfung, ob solche Information in der ersten Vorrichtung gespeichert ist, kann dann also entschieden werden, ob sich die erste Vorrichtung in einem der genannten Zustände befindet.

Bei der zweiten Prüfung kann die Abweichung beispielsweise als Betrag der Differenz der beiden zeitlichen Informationen bestimmt werden. Bei dem vordefinierten Schwellwert kann es sich beispielsweise um einen Schwellwert handeln, der einmal festgelegt und dann immer genutzt wird. Der Schwellwert kann beispielsweise unter Berücksichtigung der durchschnittlichen Sollzeitabweichung der Uhr der ersten Vorrichtung (die z.B. aus einem Datenblatt der Uhr bekannt ist) und der geschätzten Häufigkeit von Synchronisationen festgelegt werden. Wenn die durchschnittliche Sollzeitabweichung der Uhr der ersten Vorrichtung beispielsweise 6 min pro Monat beträgt, und mit einer Synchronisation mindestens alle zwei Monate gerechnet wird, kann der Schwellwert beispielsweise 12 min (gfs. mit einem zusätzlichen Sicherheitsaufschlag von einigen Minuten) gewählt werden, um einen verlässlichen Betrieb ohne wesentliche Möglichkeiten zur böswilligen Manipulation zu gewährleisten. Beispiele für vordefinierte Schwellwerte sind 5, 10, 15, 20 od. 30 Minuten oder 1, 2 od. 5 Stunden. Durch den Schwellwert wird beispielsweise ein Synchronisationsintervall um die zeitliche Information der Uhr herum definiert, wobei eine Synchronisation (gemäß der ersten Prüfung) nur erfolgt, wenn die kommunizierte zeitliche Information der zweiten Vorrichtung innerhalb dieses Synchronisationsintervalls liegt. Dadurch kann insbesondere verhindert werden, dass versucht wird, die Uhr der Zugangskontrollvorrichtung in betrügerischer Absicht auf ein anderes, insbesondere zurückliegendes Datum zu verstellen, um dann in der Lage zu sein, etwa mit für dieses andere Datum vorliegender Zugangsberechtigungsinformation Zugang zu der Zugangskontrollvorrichtung zu erlangen. Alternativ kann der Schwellwert (beispielsweise dynamisch) nach einer vordefinierten Regel bestimmt werden (beispielsweise durch die erste Vorrichtung, beispielsweise bei jeder ersten Prüfung) und kann dabei neben der durchschnittlichen Sollzeitabweichung auch die seit der letzten Synchronisation verstrichene Zeit berücksichtigen, um beispielsweise auch Fälle abzudecken, in denen die Synchronisation weniger häufig erfolgt als erwartet.

Die dritte Prüfung kann wie bereits erwähnt beispielsweise alternativ zu der zweiten Prüfung vorgesehen sein (es kann also in der ersten Vorrichtung nur entweder die zweite Prüfung oder die dritte Prüfung durchgeführt werden, aber nicht beide gemeinsam). Die dritte Prüfung stellt eine (insbesondere im Vergleich zur zweiten Prüfung) rechentechnisch einfache Prüfung dar, die sicherstellt, dass das Datum der Uhr der ersten Vorrichtung nicht vorverstellt werden kann. Dies kann beispielsweise dann eine adäquate Maßnahme darstellen, wenn von der ersten Vorrichtung zu prüfende Zugangsberechtigungen eine zeitliche Gültigkeit von jeweils einem Tag aufweisen. Solange die kommunizierte zeitliche Information keine Änderung des Datums bewirkt, also nur untertägig die Zeit verstellt, könnte diese also zur Synchronisation zugelassen werden.

Durch diese Prüfungen wird also sichergestellt, dass eine Synchronisation nur in einem Umfang erfolgt, der zur Sicherstellung der Funktionalität der ersten Vorrichtung erforderlich ist aber gleichzeitig wenig Spielraum für böswillige Manipulationen der zeitlichen Information der Uhr der ersten Vorrichtung bietet.

Anstelle der Synchronisation der Uhr unter Verwendung der kommunizierten zeitlichen Information kann auch eine Einstellung der Uhr auf einen Zeitpunkt, der sich aus der zeitlichen Information der Uhr zuzüglich oder abzüglich eines Schwellwerts (beispielsweise eines vordefinierten oder nach einer vordefinierten Regel bestimmten Schwellwerts) ergibt, stattfinden, wie nachfolgend noch genauer ausgeführt wird. In diesem Fall muss beispielsweise keine der Prüfungen ein positives Ergebnis erzielen.

Wie bereits erwähnt soll der erste Aspekt der Erfindung aber so verstanden werden, dass auch nur die erste Prüfung durchgeführt wird, ebenso wie Szenarien, in denen mehrere oder alle der ersten bis dritten Prüfung durchgeführt werden (soweit dabei die erste Prüfung enthalten ist), z.B. der ersten und der zweiten Prüfung, oder der ersten und der dritten Prüfung. Entsprechend sollen also auch derartige Verfahren, Vorrichtungen und Computerprogramme des ersten Aspekts der Erfindung als offenbart verstanden werden, in denen in der Aufzählung der durchzuführenden Prüfungen nur die erste Prüfung enthalten ist sowie alle möglichen Kombinationen von zwei oder drei dieser Prüfungen (soweit die erste Prüfung dabei enthalten ist), beispielsweise also auch die folgenden Verfahren und deren entsprechende Vorrichtungen, Computerprogramme und Systeme:
- Ein Verfahren, durchgeführt durch eine erste Vorrichtung, das folgendes umfasst: Erhalten von an die erste Vorrichtung kommunizierter zeitlicher Information; Durchführen von einer oder mehreren der folgenden Prüfungen: einer Prüfung, ob sich die erste Vorrichtung in einem Zustand nach erstmaliger Inbetriebnahme, nach einem Batteriewechsel oder nach einem Reset befindet; und Synchronisieren der Uhr unter Verwendung der kommunizierten zeitlichen Information, falls alle von einer oder mehreren vordefinierten Bedingungen erfüllt sind, wobei eine der einen oder mehreren Bedingungen erfordert, dass zumindest eine der einen oder mehreren durchgeführten Prüfung(en) ein positives Ergebnis ergeben hat.

Das Vorliegen eines positiven Prüfungsergebnisses bei zumindest einer der durchgeführten Prüfungen ist allerdings notwendige Bedingung (gfs. neben einer oder mehreren anderen Bedingung(en)) für eine Synchronisation.

Bei einer zweiten Vorrichtung, die die zeitliche Information an die erste Vorrichtung kommuniziert, kann es sich beispielsweise um ein tragbares elektronisches Gerät handeln. Das Gerät ist beispielsweise einem Nutzer (z.B. einem hinsichtlich der ersten Vorrichtung oder einer mit dieser assoziierten Vorrichtung) zugeordnet und wird daher nachfolgend als "Nutzergerät" bezeichnet. Wenn die erste Vorrichtung eine Zugangskontrollvorrichtung ist, kann die zweite Vorrichtung beispielsweise verwendet werden, um sowohl die zeitliche Information zur Synchronisation an die erste Vorrichtung zu

kommunizieren, also auch um Zugangsberechtigungsinformation an die erste Vorrichtung zu kommunizieren, um Zugang an der ersten Vorrichtung oder an einem mit der ersten Vorrichtung assoziierten Vorrichtung zu erhalten. Die zweite Vorrichtung weist beispielsweise eine graphische Benutzerschnittstelle und/oder eine eigene Stromversorgung auf. Die zweite Vorrichtung ist beispielsweise ein Mobiltelefon, ein Persönlicher Digitaler Assistent (PDA), ein Medienabspielgerät (z.B. ein iPod), oder ein Navigationsgerät. Wenn die erste Vorrichtung als Zugangskontrollvorrichtung eines Paketkastens ausgebildet ist, kann die zweite Vorrichtung beispielsweise einem Paketkastennutzer, also beispielsweise einem Besitzer des Paketkastens, oder einer Person, die über den Paketkasten Pakete empfangen oder zur Abstellung durch einen Zusteller einlegen darf gehören. Ein Zusteller wird in diesem Sinne nicht als Nutzer verstanden. Die zweite Vorrichtung ist beispielsweise zur drahtlosen Kommunikation mit der ersten Vorrichtung eingerichtet, beispielsweise über Bluetooth und/oder RFID und/oder NFC. Die zweite Vorrichtung verfügt beispielsweise über die Fähigkeit, über ein zellulares Mobilfunknetz (z.B. ein auf dem Global System for Mobile Communication (GSM), dem Universal Mobile Telecommunications System (UMTS) und/oder dem Long Term Evolution (LTE) System basierenden Mobilfunknetz) zu kommunizieren.

Alternativ kann es sich bei der zweiten Vorrichtung beispielsweise um ein tragbares elektronisches Gerät eines Zustellers handeln, insbesondere, wenn die erste Vorrichtung als Zugangskontrollvorrichtung einem Paketkasten zugeordnet ist. Dieses Gerät wird nachfolgend als "Zustellergerät" bezeichnet. Die zweite Vorrichtung verfügt dann beispielsweise über eine graphische Benutzerschnittstelle und einer Funktionalität zur drahtlosen Erfassung von Information von Paketen, beispielsweise durch optisches Scannen von Paketetiketten und/oder Erfassen von Informationen von Paketen über Funk (z.B. RFID) oder magnetische Felder (z.B. NFC), beispielsweise wenn das Paket einen RFID-Tag oder NFC-Tag aufweist. Die zweite Vorrichtung kann beispielsweise die Fähigkeit aufweisen, über ein zellulares Mobilfunknetz zu kommunizieren, dies kann aber auch nicht der Fall sein. Die zweite Vorrichtung kann beispielsweise über die Fähigkeit verfügen, über WLAN und/oder über ein zellulares Mobilfunksystem (insbesondere über GRPS) zu kommunizieren. Die zweite Vorrichtung kann beispielsweise über die Fähigkeit verfügen, über Bluetooth und/oder NFC zu kommunizieren, beispielsweise auch durch entsprechende Nachrüstung. Ein Beispiel für eine zweite Vorrichtung ist ein Handscanner, z.B. der Honeywell LXE Tecton MX7.

Wenn die zweite Vorrichtung (insbesondere das Nutzergerät und/oder das Zustellergerät) mittels Bluetooth mit der ersten Vorrichtung kommuniziert, ist es vorteilhaft, dass der zweiten Vorrichtung die Medium Access Control (MAC)-Adresse der ersten Vorrichtung bekannt ist, da dann die Bluetooth-Kommunikation ohne die Notwendigkeit des zeitaufwändigen Bluetooth-Pairings gestartet werden kann.

Weitere Eigenschaften und Vorteile der vorliegenden Erfindung werden nachfolgend anhand beispielhafter Ausführungsformen beschrieben, deren Offenbarung für den ersten Aspekt der Erfindung und alle jeweiligen Kategorien (Verfahren, Vorrichtung, Computerprogramm) gleichermaßen gelten soll.

In einer beispielhaften Ausführungsform des ersten Aspekts der Erfindung erfordert eine weitere der einen oder mehreren Bedingung(en), dass sich eine zweite Vorrichtung, die die zeitliche Information an die erste Vorrichtung kommuniziert, erfolgreich gegenüber der ersten Vorrichtung authentisiert hat. Neben zumindest einer im Ergebnis positiven Prüfung muss also Authentizität der zweiten Vorrichtung vorliegen, falls eine Synchronisation erfolgen soll. Die erste Vorrichtung kann beispielsweise die Authentizität der zweiten Vorrichtung anhand von von der zweiten Vorrichtung kommunizierten Information und von in der ersten Vorrichtung vorhandener Information prüfen. Wenn die Authentizität der zweiten Vorrichtung festgestellt wurde, kann die erste Vorrichtung davon ausgehen, dass die zweite Vorrichtung diejenige Vorrichtung ist, für die sie sich ausgibt und der die erste Vorrichtung dann beispielsweise vertrauen darf. Trotz dieser Prüfung der Authentizität könnte grundsätzlich eine missbräuchliche Synchronisation vorgenommen werden, wenn zwar die zweite Vorrichtung von der ersten Vorrichtung als authentisch erkannt wird, aber ein Bediener der zweiten Vorrichtung diese zweite Vorrichtung in missbräuchlicher Weise verwendet. Die erfindungsgemäßen Prüfungen/Bedingungen für die Synchronisation sind daher auch in Fällen vorteilhaft, in denen eine Authentizität der zweiten Vorrichtung geprüft wird. Die Authentizitätsprüfung kann beispielsweise vorteilhaft bei der Prüfung, ob eine Synchronisation aufgrund von durch die zweite Vorrichtung kommunizierter zeitlicher Information durchgeführt werden kann als auch bei einer Prüfung, ob eine von der zweiten Vorrichtung an die erste Vorrichtung kommunizierte Zugangsberechtigungsinformation zum Zugang an der ersten Vorrichtung oder einer mit dieser assoziierten Vorrichtung berechtigt, genutzt werden, wobei die Authentizitätsprüfung dann allerdings nur einmal vorgenommen werden muss (insbesondere wenn sowohl die zeitliche Information als auch die Zugangsberechtigungsinformation in der gleichen Kommunikationssitzung an die erste Vorrichtung kommuniziert werden).

Die Authentisierung der zweiten Vorrichtung gegenüber der ersten Vorrichtung kann beispielsweise auf einem dritten Schlüssel beruhen, der mit einem vierten Schlüssel, der zumindest im Zeitpunkt einer Prüfung der Authentizität der zweiten Vorrichtung in der ersten Vorrichtung vorhanden ist, ein symmetrisches oder asymmetrisches Schlüsselpaar bildet. Bei dem Schlüsselpaar kann es sich beispielsweise um ein symmetrisches Schlüsselpaar handeln, was bedeutet, dass der erste Schlüssel und der zweite Schlüssel identisch sind. Eine Ver- und Entschlüsselung mit solchen symmetrischen Schlüsseln kann beispielsweise nach den Verfahren Advanced Encryption Standard (AES), DES (Data Encryption Standard), Data Encryption Algorithm (DEA), Triple-DES, IDEA (International Data Encryption Algorithm) oder Blowfish vorgenommen werden, um nur ein paar Beispiele zu nennen. Symmetrische Schlüssel können beispielsweise pseudo-zufällig gewählt sein. Bei einem asymmetrischen Schlüsselpaar sind hingegen beide Schlüssel unterschiedlich, z.B. bei einem asymmetrischen Schlüsselpaar nach dem RSA (Rivest, Shamir, Adleman) - Verfahren oder nach dem Verfahren nach McEliece, Rabin, Chor-Rivest oder Elgamal. Verfahren zur Erzeugung von symmetrischen und asymmetrischen Schlüsseln zur Erzeugung von digitalen Signaturen, Message Authentication Codes (MACs) und zum Ver- und Entschlüsseln sind in der Publikation "Special Publication 800-133 Recommendation for Cryptographic Key Generation" des National Institute of Standards and Technology (NIST) des U.S. Department of Commerce angegeben.

Beispielsweise beruht die Authentisierung der zweiten Vorrichtung dergestalt auf dem dritten Schlüssel, dass die erste Vorrichtung von der Authentizität der zweiten Vorrichtung ausgeht, wenn diese den Besitz des dritten Schlüssels nachweisen kann, beispielsweise indem die zweite Vorrichtung an die erste Vorrichtung Informationen kommuniziert, die unter Verwendung des dritten Schlüssels erzeugt wurden. Die erste Vorrichtung kann diese Informationen dann beispielsweise anhand des vierten Schlüssels überprüfen, um die zweite Vorrichtung zu authentifizieren.

Beispielsweise können allerdings eine Vielzahl von zweiten Vorrichtungen zeitliche Informationen an die erste Vorrichtung kommunizieren, wobei sich zumindest eine Gruppe von mindestens zwei zweiten Vorrichtungen der Vielzahl von zweiten Vorrichtungen, die die zweite Vorrichtung umfasst, mit dem gleichen dritten Schlüssel gegenüber der ersten Vorrichtung authentisieren. In diesem Fall dient der dritte Schlüssel also nicht der Authentisierung einer einzelnen zweiten Vorrichtung gegenüber der ersten Vorrichtung, sondern einer Gruppe von zweiten Vorrichtungen gegenüber der ersten Vorrichtung. In diesem Fall ist die Möglichkeit zur missbräuchlichen Synchronisation einer ersten Vorrichtung also nicht auf eine einzige zweite Vorrichtung, sondern auf eine ganze Gruppe von zweiten Vorrichtungen beschränkt, so dass umso mehr Anlass besteht, die erfindungsgemäße eine oder mehrere der erfindungsgemäßen Prüfungen vorzunehmen und die Synchronisation nur unter der Voraussetzung durchzuführen, dass zumindest eine dieser Prüfungen ein positives Ergebnis erzielt hat. Die Verwendung des gleichen dritten Schlüssels auf einer Vielzahl von zweiten Vorrichtungen hat beispielsweise den Vorteil, dass die Erzeugung und Verteilung des dritten Schlüssels gegenüber einer Variante, in der geräteindividuelle dritte Schlüssel verwendet würden, erheblich vereinfacht wird.

Die Authentisierung der zweiten Vorrichtung kann beispielsweise eine Durchführung von kryptographischen Operationen über die zeitlichen Informationen unter Verwendung des dritten Schlüssels zum Erhalten von Prüfinformation und ein Kommunizieren der Prüfinformation an die erste Vorrichtung umfassen, die dann anhand der erhaltenen Prüfinformation, der erhaltenen zeitlichen Information und des vierten Schlüssels die Authentizität der zweiten Vorrichtung prüfen kann. Die Prüfinformation kann beispielsweise zusammen mit der zeitlichen Information an die erste Vorrichtung kommuniziert werden. Die Prüfinformation wird von der zweiten Vorrichtung erzeugt.

Der dritte Schlüssel und der vierte Schlüssel können beispielsweise ein asymmetrisches Schlüsselpaar bilden. Die erste Prüfinformation kann dann beispielsweise als digitale Signatur über die zeitlichen Informationen unter Verwendung des dritten Schlüssels erzeugt werden und an der ersten Vorrichtung anhand des vierten Schlüssels geprüft werden. Der dritte und vierte Schlüssel des asymmetrischen Schlüsselpaars sind dann unterschiedlich. Beispielsweise ist der dritte Schlüssel ein privater Schlüssel und der vierte Schlüssel ein öffentlicher Schlüssel, oder umgekehrt. Das Schlüsselpaar kann beispielsweise nach dem RSA-Algorithmus erzeugt worden sein. Die digitale Signatur wird beispielsweise dadurch gebildet (insbesondere in der Zugangsberechtigungserzeugungsvorrichtung), dass ein Hashwert über die zeitliche Information gebildet wird, beispielsweise nach einem Algorithmus der Secure Hash Algorithm (SHA) Familie, wie sie vom National Institute of Standards and Technology (NIST) spezifiziert sind, beispielsweise ein SHA-1, SHA-224 oder SHA-256, um nur einige Beispiele zu nennen. Der Hashwert wird dann beispielsweise mit dem dritten Schlüssel verschlüsselt, um die Prüfinformation zu erhalten. Alternativ kann die zeitliche Information auch ohne Hashwertbildung verschlüsselt werden. Zur Prüfung der Signatur wird die Prüfinformation mit dem vierten Schlüssel entschlüsselt und der dadurch erhaltene Hashwert mit einem lokal über die kommunizierte zeitliche Information nach dem gleichen Algorithmus gebildeten Hashwert verglichen. Bei Übereinstimmung der Hashwerte kann von der Authentizität der zeitlichen Information (und damit der Authentizität der zweiten Vorrichtung, die die zeitliche Information und die Prüfinformation kommuniziert hat) und der Integrität (Unversehrtheit) der zeitlichen Information ausgegangen werden. Wenn keine Hashwertbildung stattfindet, wird die durch Entschlüsselung erhaltene zeitliche Information direkt mit der kommunizierten zeitlichen Information verglichen.

Alternativ ist das durch den dritten und vierten Schlüssel gebildete Schlüsselpaar ein symmetrisches Schlüsselpaar. Das symmetrische Schlüsselpaar umfasst dann zweimal den gleichen Schlüssel, beispielsweise einen AES-Schlüssel, z.B. einen AES-128 Schlüssel. Die Prüfinformation kann wie im Falle eines asymmetrischen Schlüsselpaars durch Verschlüsselung der Zugangsberechtigungsparameter oder eines Hashwerts davon unter Verwendung des dritten Schlüssels erzeugt werden (in der zweiten Vorrichtung). Die Prüfung erfolgt dann durch Entschlüsselung der kommunizierten Prüfinformation unter Verwendung des vierten (zum dritten identischen) Schlüssels und Vergleich des Resultats mit entweder der kommunizierten zeitlichen Information oder einem lokal nach dem gleichen Algorithmus erzeugten Hashwert der kommunizierten zeitlichen Information. Bei Übereinstimmung wird von der Authentizität der zeitlichen Information (und damit der Authentizität der zweiten Vorrichtung, die die zeitliche Information und die Prüfinformation kommuniziert hat) und der Integrität der zeitlichen Information ausgegangen. Bei der Ver/Entschlüsselung kann beispielsweise ein Blockchiffre verwendet werden, beispielsweise mit einem Electronic Code Book (ECB), einem Cipher Block Chaining (CBC), einem Cipher Feedback (CFB), einem Output Feedback oder einem Counter Betriebsmodus, wie dem Fachmann bekannt sind, um die Ver/Entschlüsselung von Informationen zu ermöglichen, die länger als der Block des Blockchiffre sind. Je nach Betriebsmodus (z.B. im CPC oder CFM Betriebsmodus) kann dabei zusätzlich zu den Schlüsseln bei der Ver/Entschlüsselung ein Intialisierungsvektor (IV) erforderlich sein. Dieser kann entweder fest vereinbart (und dann beispielsweise in der ersten Vorrichtung gespeichert sein) oder für jede zeitliche Information an die erste Vorrichtung kommuniziert werden. Anstelle der Ver/Entschlüsselung der zeitlichen Information oder deren Hashwerts zum Erhalt der ersten Prüfinformation kann auch ein Nachrichtenauthentisierungscode (Message Authentication Code, MAC) zur Erzeugung der ersten Prüfinformation eingesetzt werden, der über die zeitliche Information gebildet wird und ebenfalls den (insbesondere symmetrischen) dritten Schlüssel berücksichtigt. Beispiele für MACs sind der Message Authentication Algorithm (MAA), der Keyed-Hash Message Authentication Code (HMAC) oder der von der NIST spezifizierte Cipher-Based Message Authentication Code (CMAC). Bei einem MAC wird beispielsweise in einem kombinierten Prozess eine Art Hashwert über die Zugangsberechtigungsparameter erstellt und dabei der dritte Schlüssel mit berücksichtigt. Das Ergebnis bildet die erste Prüfinformation. Zur Prüfung der Prüfinformation wird an der ersten Vorrichtung über die kommunizierte zeitliche Information unter Verwendung des vierten (zum dritten identischen) Schlüssels der MAC nach der identischen Vorschrift gebildet und das Ergebnis, die lokal erzeugte Prüfinformation, mit der kommunizierten Prüfinformation verglichen. Bei Übereinstimmung sind die Authentizität der zeitlichen Information (und damit auch der zweiten Vorrichtung, die diese zeitliche Information und die Prüfinformation kommuniziert hat) und die Integrität der zeitlichen Information erwiesen.

In einer beispielhaften Ausführungsform des ersten Aspekts der Erfindung wird an der ersten Vorrichtung an die erste Vorrichtung kommunizierte Information, die zumindest den vierten Schlüssel, verschlüsselt unter Verwendung zumindest eines ersten Schlüssels, umfasst, und der verschlüsselte vierte Schlüssel unter Verwendung zumindest eines zweiten Schlüssels entschlüsselt, um den vierten Schlüssel zu erhalten. Wenn der vierte Schlüssel an die erste Vorrichtung verschlüsselt übermittelt wird und die erste Vorrichtung diesen Schlüssel entschlüsseln kann, eröffnet dies die Möglichkeit, dass die erste Vorrichtung eine zweite Vorrichtung, die den dritten Schlüssel zur Authentisierung verwendet, authentifizieren kann. Der dritte und vierte Schlüssel können bei dieser Konstellation beliebig ausgewechselt werden, beispielsweise täglich. Beispielsweise erhält die erste Vorrichtung den vierten Schlüssel in verschlüsselter Form zusammen mit der zeitlichen Information kommuniziert, beispielsweise innerhalb der gleichen Kommunikationssitzung. Als Vertrauensanker fungiert dann der zweite Schlüssel, der beispielsweise unveränderlich in der ersten Vorrichtung gespeichert ist und zusammen mit dem ersten Schlüssel ein Geheimnis bildet, das nur die erste Vorrichtung und eine dritte Vorrichtung, die den vierten Schlüssel mit dem ersten Schlüssel verschlüsselt, kennt. Der erste Schlüssel kann insbesondere der zweiten Vorrichtung nicht bekannt sein. Die erste Vorrichtung vertraut dann in erster Linie darauf, dass vierte Schlüssel, die sie erhält, von der dritten Vorrichtung ausgegeben wurden und dass sie zweite Vorrichtungen, die den dritten Schlüssel verwenden, als vertrauenswürdig einstufen kann.

Der erste Schlüssel kann beispielsweise an einer dritten Vorrichtung gespeichert sein, wobei die dritte Vorrichtung die Information, die zumindest den unter Verwendung des ersten Schlüssels verschlüsselten vierten Schlüssel umfasst, erzeugt und diese Information und den dritten Schlüssel an die zweite Vorrichtung kommuniziert. Die dritte Vorrichtung kann beispielsweise den dritten Schlüssel und den vierten Schlüssel auch erzeugen, beispielsweise täglich von neuem, so dass jeden Tag andere dritte und vierte Schlüssel erhalten werden. Die dritte Vorrichtung kann beispielsweise eine Zugangsberechtigungserzeugungsvorrichtung sein, insbesondere ein Server, die Zugangsberechtigungsinformation erzeugt und an die zweite Vorrichtung kommuniziert, so dass sich die zweite Vorrichtung mit dieser Zugangsberechtigungsinformation an der ersten Vorrichtung oder einer mit dieser assoziierten Vorrichtung Zugang verschaffen kann, wie nachfolgend noch genauer ausgeführt werden wird. Der dritte Schlüssel wird (beispielsweise unverschlüsselt) an die zweite Vorrichtung kommuniziert, damit diese den dritten Schlüssel zur Authentisierung gegenüber der ersten Vorrichtung nutzen kann. Hingegen wird der vierte Schlüssel verschlüsselt an die zweite Vorrichtung zur Kommunikation an die erste Vorrichtung, die den verschlüsselten vierten Schlüssel dann entschlüsselt, kommuniziert. Vorteilhaft wird dann also beispielsweise eine zwischen der dritten Vorrichtung und der ersten Vorrichtung bestehende Vertrauensstruktur, repräsentiert durch den ersten und zweiten Schlüssel, genutzt, um einen Teil (den vierten Schlüssel) eines zur Authentisierung der zweiten Vorrichtung gegenüber der ersten Vorrichtung erforderlichen Schlüsselpaars (gebildet durch den dritten und vierten Schlüssel) an die erste Vorrichtung zu kommunizieren, um dieser zu ermöglichen, eine Authentifizierung der zweiten Vorrichtung zur notwendigen Bedingung für eine auf von der zweiten Vorrichtung kommunizierte zeitliche Information gestützte Synchronisation zu machen.

Der erste Schlüssel und der zweite Schlüssel bilden beispielsweise ein symmetrisches oder asymmetrisches Schlüsselpaar. Derartige Schlüsselpaare und die zugehörigen Ver-/Entschlüsselungsmechanismen wurden bereits oben bei der Beschreibung des dritten und vierten Schlüssels ausführlich erläutert.

Der vierte Schlüssel kann zusätzlich auch dazu verwendet werden, um Prüfinformation, die über Zugangsberechtigungsinformation unter Verwendung des dritten Schlüssels an der zweiten Vorrichtung gebildet und an die erste Vorrichtung kommuniziert wurde, zu prüfen, um festzustellen, dass die Zugangsberechtigungsinformation von der zweiten Vorrichtung kommuniziert und integer ist. Der vierte Schlüssel kann also zur Authentifizierung der zweiten Vorrichtung anhand von über die zeitliche Information gebildeter Prüfinformation als auch anhand von über Zugangsberechtigungsinformation gebildeter Prüfinformation genutzt werden.

In einer beispielhaften Ausführungsform des ersten Aspekts der Erfindung wird an der ersten Vorrichtung an die erste Vorrichtung kommunizierte Zugangsberechtigungsinformation, die zumindest einen Zugangsberechtigungsparameter umfasst, der einen Zeitraum definiert, innerhalb dessen die Zugangsberechtigungsinformation zum Zugang an der ersten Vorrichtung oder an einer von dieser kontrollierten Vorrichtung berechtigt, und an die erste Vorrichtung kommunizierte Prüfinformation, die durch Durchführung kryptographischer Operationen über die Zugangsberechtigungsinformation unter Verwendung des ersten Schlüssels von der dritten Vorrichtung erzeugt wird, erhalten und entschieden, ob Zugang gewährt werden darf, wobei notwendige Bedingungen zur Gewährung des Zugangs sind, dass anhand einer Auswertung der kommunizierten Prüfinformation in der ersten Vorrichtung unter Verwendung des zweiten Schlüssels und der kommunizierten Zugangsberechtigungsinformation festgestellt wird, dass die kommunizierte Prüfinformation durch Durchführung kryptographischer Operationen über die der kommunizierten Zugangsberechtigungsinformation entsprechender Information unter Verwendung des ersten Schlüssels erzeugt wurde, und dass eine Prüfung ergibt, dass die zeitliche Information der Uhr in dem von dem zumindest einen Zugangsberechtigungsparameter definierten Zeitraum liegt.

Es wird an der ersten Vorrichtung also kommunizierte Zugangsberechtigungsinformation und kommunizierte Prüfinformation erhalten. Beide Informationen werden beispielsweise von der dritten Vorrichtung, die beispielsweise eine Zugangsberechtigungserzeugungsvorrichtung sein kann (insbesondere ein Server), erzeugt und an die zweite Vorrichtung kommuniziert (z.B. direkt oder indirekt, also über ein oder mehrere weitere Vorrichtungen), die diese Informationen dann an die erste Vorrichtung kommuniziert (z.B. drahtlos). Die Informationen können beispielsweise an die zweite Vorrichtung kommuniziert werden, indem sie auf einen Tag, insbesondere einem NFC-Tag, (als Beispiel einer zweiten Vorrichtung) gespeichert werden, oder indem sie über eine beispielsweise gesicherte Verbindung an eine Software ("App") auf einem Nutzergerät, insbesondere einem Mobiltelefon, (als Beispiel einer zweiten Vorrichtung) übertragen und dort gespeichert werden, oder indem sie beispielsweise über ein Netzwerk an einen Computer übertragen werden, der die Informationen dann drahtgebunden (z.B. über eine Docking-Station) oder drahtlos an ein Zustellgerät, insbesondere einen Handscanner, (als Beispiel einer zweiten Vorrichtung) überträgt. Anhand der Prüfinformation und des zweiten Schlüssels kann die Authentizität und Integrität der an der ersten Vorrichtung erhaltenen Zugangsberechtigungsinformation und Prüfinformation (und damit auch die Authentizität der dritten Vorrichtung, von der diese Informationen letztendlich stammen) an der ersten Vorrichtung festgestellt werden, nachdem diese Informationen von der zweiten Vorrichtung an die erste Vorrichtung kommuniziert wurden. Wie bereits oben erläutert, kann die Prüfinformation beispielsweise eine digitale Signatur oder ein MAC über die Zugangsberechtigungsinformation unter Verwendung des ersten Schlüssels darstellen und dann entsprechend an der ersten Vorrichtung unter Verwendung des zweiten Schlüssels gegengeprüft werden. Die festgestellte Authentizität und Integrität der erhaltenen Informationen stellen eine erste notwendige Bedingung für die Gewährung des Zugangs dar.

In der Zugangsberechtigungsinformation sind einer oder mehrere Zugangsberechtigungsparameter enthalten. Die ein oder mehreren Zugangsberechtigungsparameter werden zusammen in dieser Spezifikation auch als Zugangsberechtigung bezeichnet. Darunter ist ein Zugangsberechtigungsparameter, der einen (beispielsweise einen einseitig oder beidseitig begrenzten) Zeitraum definiert, innerhalb dessen die Zugangsberechtigungsinformation zum Zugang an der ersten Vorrichtung oder an einer von dieser kontrollierten Vorrichtung berechtigt. Der Zeitraum kann also durch einen Zugangsberechtigungsparameter definiert werden (z.B. im Fall von vordefinierten Zeiträumen, die durch den Zugangsberechtigungsparameter dann indiziert werden), oder durch mehrere Zugangsberechtigungsparameter. Beispielsweise können ein "Nicht-Vor-Datum" und ein "Nicht-Nach-Datums" als Zugangsberechtigungsparameter einen solchen Zeitraum definieren. Zusätzlich oder alternativ können eine "Startzeit des Tages" und einer "Endzeit des Tages" als Zugangsberechtigungsparameter hinzutreten, die angeben, innerhalb welcher Tageszeit Zugang gewährt werden darf. Diese Tageszeiteinschränkung kann sich beispielsweise auf jeden Tag eines durch die Datumsangaben definierten Zeitraums beziehen, oder nur auf den ersten Tag, für den die "Startzeit des Tages" festgelegt wird, und den letzten Tag, für den die "Endzeit des Tages" festgelegt wird. Wie diese Uhrzeitangaben zu verstehen sind, ist beispielsweise vordefiniert, damit Einheitlichkeit herrscht. Ein möglicher Zeitraum ist also beispielsweise vom 27.3.2014 00:00:00 Uhr bis zum 28.3.2014 23:59:59 Uhr (oder bei alternativer Definition vom 27.3.2014 bis zum 28.3.2014 jeweils von 08:00:00 Uhr bis 20:00:00 Uhr). In diesen Beispielen war der Zeitraum beidseitig begrenzt. Der Zeitraum kann beispielsweise auch nur durch eine explizite Grenze definiert sein, wobei sich die andere Grenze implizit ergibt. Beispielsweise kann der Zeitraum durch den Endpunkt definiert sein, also z.B. i.d.F. "bis zum 1.1.2014 23:59:59" und kann dann ab dem Zeitpunkt der Erstellung der Berechtigungsinformation (impliziter Startpunkt) bis zu diesem Endpunkt gelten. In gleicher Weise kann auch der Startpunkt explizit und der Endpunkt implizit gegeben sein, beispielsweise i.d.F. "ab dem 5.5.2014 23.59.59", was bedeutet, dass das Zeitintervall vom 5.5.2014 23:59:59 bis unendlich reicht, was einem einseitig begrenzten Zeitraum entspricht.

Eine notwendige Bedingung für die Gewährung von Zugang ist nun, dass eine Prüfung ergibt, dass die zeitliche Information der Uhr der ersten Vorrichtung in dem von dem zumindest einen Zugangsberechtigungsparameter definierten Zeitraum liegt. In den im vorigen Absatz genannten Beispiel, in dem der Zeitraum als vom 27.3.2014 00:00:00 Uhr bis zum 28.3.2014 23:59:59 Uhr definiert ist, würde also Zugang gewährt, wenn die Uhr der ersten Vorrichtung im Zeitpunkt der Prüfung als Datum den 28.3.2014 und als Uhrzeit 15:00:00 Uhr angeben würde, da dies für beide Beispiele innerhalb des definierten Zeitraums liegen würde. Wenn die zeitliche Information der Uhr allerdings als Datum den 29.3.2014 und als Uhrzeit 8:00 Uhr anzeigen würde, würde kein Zugang gewährt. Mit der vorliegenden Zugangsberechtigungsinformation könnte also nur Zugang erwirkt werden, wenn die Uhr der ersten Vorrichtung über 8 Stunden zurückgestellt würde, was allerdings sowohl durch die zweite Prüfung (bei einem Schwellwert von beispielsweise 10 min) als auch die dritte Prüfung (aufgrund des mit der versuchten Rückverstellung verbundenen Datumswechsels) vereitelt würde wie oben beschrieben.

Wenn entschieden wird, dass Zugang gewährt werden darf, wird beispielsweise Zugang gewährt, beispielsweise durch Absetzen eines Steuersignals, beispielsweise an ein Schloss, um beispielsweise eine Tür zu einem oder mehreren Räumen (z.B. Aufnahmeräume einer Aufnahmevorrichtung) zu entriegeln und/oder zu öffnen um den Zugang zu den ein oder mehreren Räumen zu ermöglichen. Der Zugang kann in unterschiedlichem Ausmaß gewährt werden, beispielsweise können bei Vorhandensein von mehreren Aufnahmeräumen lediglich Zugang zu bestimmten Aufnahmeräumen oder Gruppen von Aufnahmeräumen gewährt werden. Das Ausmaß des Zugangs kann beispielsweise in einem Zugangsberechtigungsparameter der Zugangsberechtigungsinformation definiert sein.

Eine gemäß der vorliegenden beispielhaften Ausführungsform vorgenommene Zugangskontrolle weist eine Reihe von Vorteilen auf. Dadurch, dass die erste Vorrichtung und die dritte Vorrichtung das Schlüsselpaar als Geheimnis behandeln, wird einerseits die dritte Vorrichtung in die Lage versetzt, ausschließlich selbst Zugangsberechtigungsinformation für die erste Vorrichtung zu erstellen. Die erste Vorrichtung andererseits kann der von der dritten Vorrichtung erzeugten Zugangsberechtigungsinformation vertrauen. Daher können auch die Zugangsberechtigungsparameter grundsätzlich unverschlüsselt an die erste Vorrichtung kommuniziert werden: Unter Verwendung des zweiten Schlüssels des Schlüsselpaars kann deren Integrität und die Authentizität der Zugangsberechtigungsinformation hinreichend bestätigt werden. Da die erste Vorrichtung lokale Bezugsinformationen wie z.B. die aus der Uhr der ersten Vorrichtung abgeleitete zeitliche Information zur Prüfung der kommunizierten Zugangsberechtigungsparameter verwendet, ist die erste Vorrichtung im Wesentlichen autark und kommt ohne Netzwerkanbindung aus. Dies reduziert auch den Stromverbrauch, was bei einer batteriebetriebenen Vorrichtung ebenfalls erheblich ist. Des Weiteren werden in der ersten Vorrichtung die kryptographischen Operationen über die kommunizierten Zugangsberechtigungsparameter vorgenommen, und nicht über lokal vorhandene. Dies erlaubt es insbesondere, die Prüfung der Integrität der erhaltenen Informationen von der Prüfung deren Inhalts zu trennen. Würden beispielsweise alternativ die "erwartete" erste Prüfinformation in der ersten Vorrichtung berechnet und dann mit der kommunizierten ersten Prüfinformation verglichen, müsste je nach Granularität der als Zugangsberechtigungsparameter eingesetzten zeitlichen Gültigkeit (z.B. 1 Minute, 10 Minuten, 1 Stunde) für eine Vielzahl von Zeitpunkten die erwartete erste Prüfinformation gebildet und mit der kommunizierten ersten Prüfinformation verglichen werden, um mit zumindest einer erwarteten ersten Prüfinformation die kommunizierte Prüfinformation genau zu "treffen". Stattdessen wird vorliegend die Integrität des kommunizierten Zeitraums festgestellt und dieser Zeitraum mit der zeitlichen Information der Uhr der ersten Vorrichtung verglichen, um wesentlich einfacher und schneller festzustellen, ob die Differenz noch innerhalb einer vordefinierten Toleranz liegt.

In einer beispielhaften, zu der vorherigen Ausführungsform alternativen Ausführungsform des ersten Aspekts der Erfindung wird an die erste Vorrichtung kommunizierte Zugangsberechtigungsinformation erhalten, die zumindest einen Zugangsberechtigungsparameter umfasst, der einen (insbesondere begrenzten) Zeitraum definiert, innerhalb dessen die Zugangsberechtigungsinformation zum Zugang an der ersten Vorrichtung oder an einer von dieser kontrollierten Vorrichtung berechtigt, und es wird entschieden, ob Zugang gewährt werden darf, wobei notwendige Bedingung zur Gewährung des Zugangs ist, dass eine Prüfung ergibt, dass die zeitliche Information der Uhr in dem von dem zumindest einen Zugangsberechtigungsparameter definierten Zeitraum liegt. Bei dieser Ausführungsform wird im Gegensatz zu der zuvor präsentierten Ausführungsform keine Prüfinformation über die Zugangsberechtigungsinformation gebildet und an der ersten Vorrichtung geprüft. Eine Prüfung des Zeitraums gegen die zeitliche Information der Uhr der ersten Vorrichtung findet aber statt und deren positiver Ausgang bildet eine notwendige Bedingung für die Gewährung des Zugangs. Die Beschreibung der Eigenschaften und Vorteile der vorliegenden Ausführungsform, insbesondere der Definition des Zeitraums durch die ein oder mehreren Zugangsberechtigungsparameter und dessen/deren Prüfung in der ersten Vorrichtung, entspricht mithin der Beschreibung zu der zuvor präsentierten Ausführungsform, wobei der Aspekt der Prüfung der Authentizität und der Integrität an der ersten Vorrichtung entfällt.

In den beiden zuvor beschriebenen Ausführungsformen kann die kommunizierte Zugangsberechtigungsinformation ferner einen Zugangsberechtigungsparameter umfassen, der angibt, ob eine Synchronisation der Uhr der ersten Vorrichtung vorgenommen werden darf oder nicht, und wobei eine weitere der einen oder mehreren Bedingung(en) erfordert, dass der Zugangsberechtigungsparameter angibt, dass eine Synchronisation der Uhr der ersten Vorrichtung vorgenommen werden darf. Die Aufnahme eines auf die Zulässigkeit der Synchronisation der Uhr der ersten Vorrichtung gerichteten Zugangsberechtigungsparameter in die Zugangsberechtigungsinformation schränkt die Möglichkeiten eines potentiellen Angreifers, der eine missbräuchliche Synchronisation der Uhr durchführen möchte, weiter ein, da er dann auch den Zugangsberechtigungsparameter manipulieren müsste oder Zugangsberechtigungsinformation zur Verfügung haben müsste, in der dieser Zugangsberechtigungsparameter entsprechend gewählt ist, damit eine Synchronisation vorgenommen werden kann. Die Manipulation dieses Zugangsberechtigungsparameter wird insbesondere dann erschwert, wenn über die Zugangsberechtigungsinformation unter Verwendung des ersten Schlüssels kryptographische Operationen zur Erzeugung von Prüfinformation durchgeführt werden, wie es in dem ersten der beiden zuletzt beschriebenen Ausführungsformen der Fall ist. Der Zugangsberechtigungsparameter kann beispielsweise aus mehreren Bits bestehen, die einzeln gesetzt werden können, um bestimmte mit der Zugangsberechtigungsinformation verknüpfte Rechte anzugeben. Beispielsweise kann ein Bit gesetzt sein, um anzuzeigen, dass eine Synchronisation vorgenommen werden darf. Beispielsweise kann zusätzlich oder alternativ ein anderes Bit gesetzt sein, das anzeigt, dass Zugang zu der ersten Vorrichtung oder einer von dieser kontrollierten Vorrichtung gewährt werden soll, beispielsweise zum Öffnen von einer oder mehreren Türen eines Paketkastens. Es kann also beispielsweise der Fall auftreten, dass die gleiche Zugangsberechtigungsinformation zu mehreren Aktionen berechtigt, z.B. Zugang zu der ersten Vorrichtung oder einer von dieser kontrollierten Vorrichtung gewährt und eine Synchronisation der Uhr der ersten Vorrichtung gestattet.

In einer beispielhaften Ausführungsform des ersten Aspekts der Erfindung umfasst die kommunizierte Zugangsberechtigungsinformation ferner einen oder mehrere weitere Zugangsberechtigungsparameter, und wobei eine weitere der einen oder mehreren Bedingung(en) erfordert, dass eine Prüfung jedes der ein oder mehreren weiteren Zugangsberechtigungsparameter gegen jeweilige zumindest im Zeitpunkt der Prüfung in der ersten Vorrichtung vorhandene

Bezugsinformationen ergibt, dass der jeweilige Zugangsparameter die Gültigkeit der Zugangsberechtigungsinformation widerspiegelt. Beispiele für die weiteren Zugangsberechtigungsparameter sind eine Kennung für die erste Vorrichtung (die z.B. gegen eine in der ersten Vorrichtung gespeicherte Kennung der ersten Vorrichtung als Bezugsinformation verglichen wird), und/oder eine Anzahl von maximal erlaubten Nutzungen der Zugangsberechtigungsinformation (die z.B. gegen einen entsprechenden Zähler für bereits erfolgte Nutzungen dieser Zugangsberechtigungsinformation an der ersten Vorrichtung verglichen wird). Diese zusätzlichen Zugangsberechtigungsparameter und deren Prüfung gegen jeweilige Bezugsinformation schränkt die Freiheit in der insbesondere missbräuchlichen Benutzung der Zugangsberechtigungsinformation insbesondere zur missbräuchlichen Synchronisation der Uhr deutlich ein.

In einer beispielhaften Ausführungsform des ersten Aspekts der Erfindung findet das Synchronisieren der Uhr vor der Prüfung, ob die zeitliche Information der Uhr in dem von dem zumindest einen Zugangsberechtigungsparameter definierten Zeitraum liegt, statt. Dadurch wird sichergestellt, dass die Uhr der ersten Vorrichtung auf einem aktuellen Stand ist, wenn geprüft wird, ob die Zugangsberechtigungsinformation in zeitlicher Hinsicht noch gültig ist.

In einer beispielhaften Ausführungsform des ersten Aspekts der Erfindung werden die zeitliche Information und die Zugangsberechtigungsinformation innerhalb der gleichen Kommunikationssitzung an die erste Vorrichtung kommuniziert. Eine Kommunikationssitzung ist beispielsweise definiert durch die zwischen der Einrichtung einer Kommunikationsverbindung zwischen der zweiten Vorrichtung und der ersten Vorrichtung und der Auslösung dieser Kommunikationsverbindung zwischen den beiden Vorrichtungen stattfindenden Kommunikation. Die Kommunikationsverbindung kann beispielsweise eine drahtgebundene Verbindung sein, insbesondere eine Bluetooth-Verbindung. Es werden also sowohl die Zugangsberechtigungsinformation als auch die zur Synchronisation der Uhr der ersten Vorrichtung dienende zeitliche Information in der gleichen Kommunikationssitzung kommuniziert, beispielsweise hintereinander. In dieser Kommunikationssitzung ist dann beispielsweise nur eine einmalige Entschlüsselung des vierten Schlüssels an der ersten Vorrichtung nötig (z.B. basierend auf dem zweiten Schlüssel wie oben erläutert).

In einer beispielhaften Ausführungsform des ersten Aspekts der Erfindung entspricht der Zeitraum, der durch den zumindest einen Zugangsberechtigungsparameter definiert wird, einem Tag. Die Zugangsberechtigungsinformation ist dann für einen Tag gültig (z.B. von 00:00:00 Uhr bis 23:59:59 Uhr). In diesem Fall kann sowohl die zweite Prüfung als auch die dritte Prüfung (allerdings alternativ) sinnvoll sein, wobei die dritte Prüfung weniger rechenaufwändig ist.

In einer beispielhaften Ausführungsform des ersten Aspekts der Erfindung wird an der ersten Vorrichtung an die erste Vorrichtung kommunizierte Zugangsberechtigungsinformation erhalten, die zumindest einen Zugangsberechtigungsparameter umfasst, der angibt, ob eine Synchronisation der Uhr der ersten Vorrichtung vorgenommen werden darf oder nicht, und wobei eine weitere der einen oder mehreren Bedingung(en) erfordert, dass der Zugangsberechtigungsparameter angibt, dass eine Synchronisation der Uhr der ersten Vorrichtung vorgenommen werden darf. In dieser Ausführungsform ist es im Gegensatz zu einigen der weiter oben beschriebenen Ausführungsformen nicht erforderlich, dass auch ein Zugangsberechtigungsparameter in der Zugangsberechtigungsinformation enthalten ist, der einen Gültigkeitszeitraum der Zugangsberechtigungsinformation definiert. Wie oben bereits erläutert erschwert die Aufnahme eines auf die Zulässigkeit der Synchronisation gerichteten Zugangsberechtigungsparameters Manipulationen.

In einer beispielhaften Ausführungsform des ersten Aspekts der Erfindung wird an die erste Vorrichtung kommunizierte Zugangsberechtigungsinformation erhalten, die zumindest einen Zugangsberechtigungsparameter umfasst, der einen (insbesondere begrenzten) Zeitraum definiert, wobei eine weitere der einen oder mehreren Bedingung(en) erfordert, dass die kommunizierte zeitliche Information innerhalb des Zeitraums liegt. Bei dem zumindest einen Zugangsberechtigungsparameter kann es sich beispielsweise um den in bereits beschriebenen beispielhaften Ausführungsformen auftretenden zumindest einen Zugangsberechtigungsparameter handeln, der einen Zeitraum definiert, innerhalb dessen die Zugangsberechtigungsinformation zum Zugang an der ersten Vorrichtung oder an einer von dieser kontrollierten Vorrichtung berechtigt. Der Zeitraum ist dann maßgeblich sowohl für den möglichen Zeitpunkt des Zugangs zu der ersten Vorrichtung als auch für den möglichen Zeitpunkt der Synchronisation der Uhr der ersten Vorrichtung. Die Zugangsberechtigungsinformation stammt beispielsweise von einer anderen Vorrichtung (beispielsweise der dritten Vorrichtung) als die kommunizierte zeitliche Information (die beispielsweise von der zweiten Vorrichtung stammt).

In einer beispielhaften Ausführungsform erfordert eine weitere der einen oder mehreren Bedingung(en), dass ein Datum der kommunizierten zeitlichen Information später ist als ein Datum des Zeitpunkts der letzten Synchronisation oder Einstellung der Uhr (beispielsweise eines nachfolgend noch beschriebenen Einstellens der zeitlichen Information der Uhr auf einen Zeitpunkt, der sich aus der zeitlichen Information der Uhr abzüglich oder zuzüglich eines Schwellwerts ergibt). Dadurch kann beispielsweise vermieden werden, dass an einem Tag eine mehrfache Synchronisation oder Einstellung der Uhr erfolgt, die beispielsweise zu Manipulationen genutzt werden könnte. Das Datum des Zeitpunkts der letzten Synchronisation oder Einstellung der Uhr - oder zeitliche Information, aus der dieses Datum gewonnen werden kann - kann beispielsweise bei jeder Synchronisation oder Einstellung der Uhr in der ersten Vorrichtung gespeichert werden.

In einer beispielhaften Ausführungsform des ersten Aspekts der Erfindung wird die Uhr der ersten Vorrichtung bei erstmaliger Inbetriebnahme, nach einen Batteriewechsel oder sonstigen Stromausfall oder nach einem Reset automatisch auf einen vordefinierten Zeitpunkt, den Zeitpunkt der letzten Synchronisation oder einen anderen in der ersten Vorrichtung gespeicherten Zeitpunkt eingestellt und beginnt ab diesem zu laufen. Der vordefinierte Zeitpunkt kann beispielsweise der 1. Januar 1970 00:00:00 Uhr sein, und ab diesem Zeitpunkt kann dann die Zeit in Sekundenschritten hochgezählt werden, so dass die zeitliche Information einem Zähler von Sekunden seit diesem Zeitpunkt entspricht. Der Zeitpunkt der letzten Synchronisation kann beispielsweise als Zeitstempel von der Uhr der ersten Vorrichtung festgestellt und in einem persistenten Speicher gespeichert sein, der auch bei Stromausfall seine Daten behält. Auch dieser Zeitpunkt kann als Anzahl von Sekunden seit einem Bezugspunkt, beispielsweise dem 1. Januar 1970 00:00:00 Uhr repräsentiert sein. Der andere in der ersten Vorrichtung gespeicherte Zeitpunkt kann beispielsweise der jüngste Zeitstempel eines Eintrags in einem durch die erste Vorrichtung geführten Ereignisspeichers (z.B. eines zu Analysezwecken auslesbaren "Logs") sein, oder ein Zeitstempel oder Zeitpunkt, der in regelmäßigen oder unregelmäßigen Abständen von der ersten Vorrichtung abgespeichert wird. Der andere in der ersten Vorrichtung gespeicherte Zeitpunkt kann beispielsweise ein mit einem Zustandswechsel und/oder angeforderten Resets in der ersten Vorrichtung assoziierter Zeitpunkt sein. Beispielsweise kann jedes Mal (oder auch jedes n-te Mal, wobei n eine vordefinierte natürliche Zahl ungleich 0 ist), wenn die erste Vorrichtung in einen vordefinierten Zustand, insbesondere einen Energiesparzustand, oder in einen Aktivzustand übergeht (und beispielsweise zusätzlich oder alternativ auch dann, wenn die erste Vorrichtung ein Reset-Signal erhält und daraufhin einen Reset durchführt), der Zeitpunkt dieses Zustandswechsels gespeichert werden. Der Zeitstempel oder Zeitpunkt kann beispielsweise dediziert zu dem Zweck abgespeichert werden, um im Falle eines Batteriewechsels oder sonstigen Stromausfalls oder eines Resets eine möglichst aktuelle Uhrzeit zur Neueinstellung der Uhr der ersten Vorrichtung zur Verfügung zu haben. Der andere Zeitpunkt kann beispielsweise in einem persistenten Speicher der ersten Vorrichtung gespeichert sein und beispielsweise ebenfalls als Anzahl von Sekunden seit einem Bezugspunkt, beispielsweise dem 1. Januar 1970 00:00:00 Uhr repräsentiert sein.

In einer beispielhaften Ausführungsform des ersten Aspekts der Erfindung wird bei der Prüfung, ob sich die erste Vorrichtung in einem Zustand nach erstmaliger Inbetriebnahme, nach einem Batteriewechsel oder sonstigem Stromausfall oder nach einem Reset befindet, ferner geprüft, ob die kommunizierte zeitliche Information später ist als eine zeitliche Information der Uhr der ersten Vorrichtung oder als die zeitliche Information der Uhr der ersten Vorrichtung abzüglich (oder alternativ zuzüglich) eines vordefinierten oder nach einer vordefinierten Regel bestimmten Schwellwerts, und wobei ein positives Ergebnis dieser Prüfung lediglich vorliegt, wenn festgestellt wird, dass sich die Vorrichtung in einem Zustand nach erstmaliger Inbetriebnahme, nach einem Batteriewechsel oder sonstigen Stromausfall oder nach einem Reset befindet und die kommunizierte zeitliche Information später ist als die zeitliche Information der Uhr der ersten Vorrichtung oder als die zeitliche Information der Uhr der ersten Vorrichtung abzüglich (oder alternativ zuzüglich) des Schwellwerts. Hier wird die erste Prüfung dahingehend erweitert, dass nicht nur der Zustand nach einem bestimmten Ereignis (erstmalige Inbetriebnahme, Batteriewechsel oder sonstiger Stromausfall, Reset) festgestellt werden muss, sondern zusätzlich die kommunizierte zeitliche Information auch später sein muss als die zeitliche Information der Uhr der ersten Vorrichtung ggf. abzüglich eines Schwellwerts (also z.B. ein durch die kommunizierte zeitliche Information definierter Zeitpunkt nach einem durch die zeitliche Information der ersten Vorrichtung definierten Zeitpunkt (ggf. abzüglich eines Schwellwerts) liegen muss). Dies schränkt die Manipulationsmöglichkeiten eines Angreifers auch in diesem Sonderbetriebszustand der ersten Vorrichtung noch weiter ein und kann insbesondere dann sinnvoll sein, wenn die Uhr der ersten Vorrichtung nach einem der genannten Ereignisse nicht auf einen (i.d.R. weit zurückliegenden) Standardzeitpunkt eingestellt wird, sondern auf einen späteren Zeitpunkt, insbesondere den Zeitpunkt der letzten Synchronisation, der beispielsweise nur eine geringe Abweichung (z.B. wenige Stunden) von der aktuellen Zeit haben kann.

In einer beispielhaften Ausführungsform des ersten Aspekts der Erfindung berücksichtigt die vordefinierte Regel, nach der der Schwellwert bestimmt wird, zumindest die durchschnittliche Sollzeitabweichung der Uhr pro Zeiteinheit und die seit der letzten erfolgten Synchronisierung oder dem Stellen der Uhr vergangene Zeit (also beispielsweise die Zeitdifferenz zwischen dem Zeitpunkt der letzten erfolgten Synchronisation oder dem Stellen der Uhr und dem gegenwärtig durch die Uhr der ersten Vorrichtung angegebene Zeit). Das Stellen der Uhr kann beispielsweise bei erstmaliger Inbetriebnahme der ersten Vorrichtung, nach einem Batteriewechsel oder sonstigem Stromausfall oder nach einem Reset erfolgen, wie oben bereits erläutert wurde. Anschließend können entweder Synchronisationen erfolgt sein oder nicht. Wenn nun seit der letzten erfolgten Synchronisation oder dem Stellen der Uhr beispielsweise eine Zeit T (z.B. in Tagen) verstrichen ist, und die durchschnittliche Sollzeitabweichung der Uhr pro Zeiteinheit (z.B. Tag) D beträgt, kann die Regel zur Bestimmung des Schwellwerts K beispielsweise als K=m*T*D + L bestimmt werden, wobei T*D die durchschnittlich zu erwartende absolute Sollzeitabweichung darstellt, m ein Sicherheitsfaktor ist, der die Varianz der durchschnittlichen Sollzeitabweichung ausgleichen und sicherstellen soll, dass K nicht zu klein gewählt wird und L ein konstanter Wert ist, der die durch die Kommunikation der zeitlichen Information von der zweiten Vorrichtung an die erste Vorrichtung und deren Verarbeitung in der ersten Vorrichtung erzeugte Verzögerung berücksichtigen soll. Der Faktor m kann beispielsweise größer als 1 und kleiner als 10 gewählt werden, z.B. als 5. Der Wert L kann beispielsweise durch Messungen der durchschnittlichen Übertragungsdauer und Verarbeitungsdauer ermittelt werden, und kann beispielsweise zwischen 1 s und 10 Minuten liegen. Wenn die durchschnittliche Sollzeitabweichung der Uhr der ersten Vorrichtung nun beispielsweise D=0,5 s / Tag beträgt, und seit der letzten Synchronisation oder dem Stellen der Uhr der ersten Vorrichtung T= 10 Tage vergangen sind, ergäbe sich bei Wahl von m=5 und L=5 min der Schwellwert K= 25 s + 300 s=325 s. Der durch die Sollzeitabweichung der Uhr beeinflusste Summand m*T*D in K kann bei länger zurückliegender Synchronisation bzw. Stellen der Uhr bedeutsamer werden. Wenn die Uhr der ersten Vorrichtung beispielsweise T=60 Tage lang nicht mehr synchronisiert wurde, ergibt sich mit den obigen Annahmen für D, m und L ein Schwellwert K= 150 s + 300 s = 450 s. Die Bestimmung eines Schwellwerts nach einer vordefinierten Regel erlaubt es also, das Zeitintervall, in dessen Rahmen eine Synchronisation der zeitlichen Information der Uhr der ersten Vorrichtung angepasst werden kann, auf den technisch sinnvollen Umfang einzugrenzen und damit einen Ausgleich zwischen größtmöglicher Sicherheit gegen Angriffe und technischer Notwendigkeit der Synchronisation in einem erforderlichen Umfang zu schaffen.

In einer beispielhaften Ausführungsform des ersten Aspekts der Erfindung wird in dem Fall, dass die Prüfung ergibt, dass die Abweichung zwischen der zeitlichen Information der Uhr und der kommunizierten zeitlichen Information nicht entweder kleiner oder kleiner-oder-gleich ist als der Schwellwert, folgendes durchgeführt:
- Einstellen der Uhr auf einen Zeitpunkt, der sich aus der zeitlichen Information der Uhr abzüglich des Schwellwerts ergibt, falls die kommunizierte Information kleiner ist als die zeitliche Information der Uhr abzüglich des Schwellwerts; und
- Einstellen der Uhr auf einen Zeitpunkt, der sich aus der zeitlichen Information der Uhr zuzüglich des Schwellwerts ergibt, falls die kommunizierte Information nicht kleiner ist als die zeitliche Information der Uhr abzüglich des Schwellwerts.

Obwohl aufgrund des Ergebnisses der zweiten Prüfung also keine Synchronisation der Uhr unter Verwendung der kommunizierten zeitlichen Information möglich ist, wird dennoch die Uhr zumindest in die Richtung der kommunizierten zeitlichen Information verstellt, aber nur in einem Umfang, der durch den Schwellwert begrenzt wird. Beispielsweise kann vorgesehen sein, dass ein derartiges Einstellen der Uhr nur einmal pro Tag erfolgen kann, um Manipulationen zu vermeiden. Dies kann beispielsweise dadurch erfolgen, dass eine weitere der einen oder mehreren Bedingung(en) erfordert, dass ein Datum der kommunizierten zeitlichen Information später ist als ein Datum des Zeitpunkts der letzten Synchronisation oder Einstellung der Uhr, wie bereits oben beschrieben wurde.

In einer beispielhaften Ausführungsform des ersten Aspekts der Erfindung wird die zeitliche Information aus einer Uhr einer zweiten Vorrichtung gewonnen und drahtlos an die erste Vorrichtung kommuniziert. Die Uhr der zweiten Vorrichtung kann beispielsweise eine elektronische Uhr sein. Die Uhr der zweiten Vorrichtung kann beispielsweise durch zeitliche Informationen, die von einer vierten Vorrichtung empfangen werden, synchronisiert werden. Dabei kann es sich beispielsweise um eine Vorrichtung handeln, über die die zweite Vorrichtung die Zugangsberechtigungsinformation erhält. Die vierte Vorrichtung kann beispielsweise die Uhren mehrerer zweiter Vorrichtungen synchronisieren. Wenn es sich bei der zweiten Vorrichtung um ein Zustellergerät, insbesondere einen Handscanner handelt, kann die vierte Vorrichtung beispielsweise ein Zustellbasis-Personalcomputer (ZBPC) sein. Die vierte Vorrichtung kann beispielsweise eine Funkuhr aufweisen (also eine mittels von einem Zeitzeichensender wie z.B. dem DCF-77 empfangenen Signalen nachgeregelte Uhr) oder mittels eines Netzwerk-Synchronisationsdienstes (z.B. pool.ntp.org) zeitlich synchronisiert werden. Die dritte Vorrichtung, die die Zugangsberechtigungsinformation erzeugt, kann beispielsweise dieselbe Art der zeitlichen Synchronisation verwenden (z.B. eine Funkuhr oder einen Netzwerk-Synchronisationsdienst wie z.B. pool.ntp.org). Damit ist sichergestellt, dass die erste Vorrichtung und die dritte Vorrichtung die gleiche Zeit verwenden. Die Synchronisation der vierten Vorrichtung kann allerdings auch durch von der dritten Vorrichtung empfangene Zeitsignale geschehen, unabhängig davon, woher die dritte Vorrichtung ihre Zeit bezieht.

In einer beispielhaften Ausführungsform des ersten Aspekts der Erfindung kontrolliert die erste Vorrichtung den Zugang zu einem Behälter, insbesondere einem Paketkasten. Beispielsweise kann die Ver-und/oder Entriegelung von ein oder mehreren Türen zu ein oder mehreren Fächern des Behälters kontrolliert werden.

In einer beispielhaften Ausführungsform des ersten Aspekts der Erfindung ist die zweite Vorrichtung ein elektronisches tragbares Gerät eines Zustellers von Sendungen (z.B. Paketen oder Briefen), insbesondere ein Handscanner.

In einer beispielhaften Ausführungsform des ersten Aspekts der Erfindung erfolgt die Kommunikation der zeitlichen Information an die erste Vorrichtung mittels drahtloser Kommunikation erfolgt, insbesondere über Bluetooth oder NFC.

Die oben beschriebenen Ausführungsbeispiele und beispielhaften Ausgestaltungen des ersten Aspekts der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1:: eine schematische Darstellung einer beispielhaften Ausführungsform eines Systems gemäß der vorliegenden Erfindung,
- Fig. 2:: eine schematische Darstellung einer beispielhaften Ausführungsform einer Vorrichtung gemäß der vorliegenden Erfindung,
- Fig. 3A/B:: ein sich über zwei Figuren erstreckendes Flussdiagramm einer beispielhaften Ausführungsform eines Verfahrens gemäß der vorliegenden Erfindung;
- Fig. 3C:: ein alternatives Ende des Flussdiagramms der Fig. 3A/3B gemäß einer beispielhaften Ausführungsform eines Verfahrens gemäß der vorliegenden Erfindung;
- Fig. 4:: eine schematische Darstellung einer weiteren beispielhaften Ausführungsform eines Systems gemäß der vorliegenden Erfindung; und
- Fig. 5:: ein Flussdiagramm der möglichen Reihenfolge von Operationen in einer beispielhaften Ausführungsform eines Paketkastens gemäß der vorliegenden Erfindung.

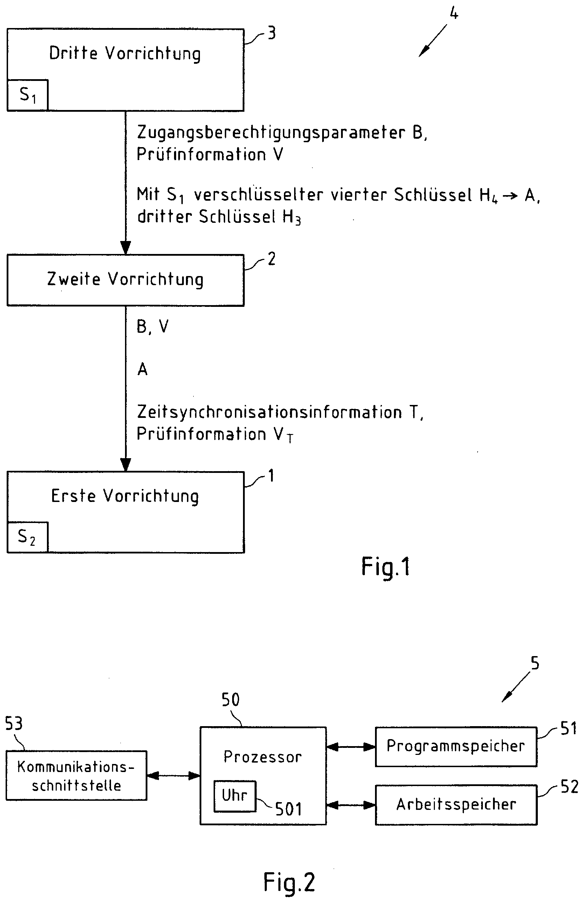

Eine Übersicht eines Systems 4, in dem beispielhafte Ausführungsformen der ersten Vorrichtung 1 und der zweiten Vorrichtung 2 der vorliegenden Erfindung eingesetzt werden können, ist in Fig. 1 dargestellt. Das System 4 umfasst eine dritte Vorrichtung 3 (z.B. eine Zugangsberechtigungserzeugungsvorrichtung), eine zweite Vorrichtung 2 (z.B. eine Zugangsberechtigungsnachweisvorrichtung) und eine erste Vorrichtung 1 (z.B. eine Zugangskontrollvorrichtung). Insbesondere die zweite Vorrichtung 2 und die erste Vorrichtung 1 können mehrfach vorhanden sein, sind aber aus Gründen der Vereinfachung der Darstellung jeweils nur einfach vertreten. Die Komponente 1 stellt eine beispielhafte Vorrichtung gemäß dem ersten Aspekt der Erfindung dar, deren Eigenschaften bereits ausführlich geschildert wurden. Fig. 1 dient daher primär der Verdeutlichung, welche Schlüssel in den einzelnen Komponenten gespeichert sind und welche Informationen zwischen den Komponenten ausgetauscht werden. Die dritte Vorrichtung 3 speichert insbesondere den ersten Schlüssel S₁, der mit einem zweiten Schlüssel S₂ in der ersten Vorrichtung 1 ein Schlüsselpaar (S₁, S₂) bildet. Dieses Paar kann ein symmetrisches oder asymmetrisches Schlüsselpaar bilden, wobei im Falle eines symmetrischen Schlüsselpaars beide Schlüssel gleich sind, also z.B. S₁=S₂=S gilt und im Falle eines asymmetrischen Schlüsselpaars S₁≠S₂ gilt.

Die dritte Vorrichtung 3 erzeugt und überträgt folgende Informationen an die zweite Vorrichtung 2:
- Zugangsberechtigungsinformation B und erste Prüfinformation V,
- den mit S₁ verschlüsselten vierten Schlüssel H₄, im Rahmen der Information A, und
- einen dritten Schlüssel H₃.

Diese Informationen können beispielsweise zumindest teilweise (oder vollständig) innerhalb der gleichen Kommunikationssitzung zwischen der dritten Vorrichtung 3 und der zweiten Vorrichtung 2 übertragen werden (also beispielsweise zwischen der Einrichtung und der Auslösung einer Kommunikationsverbindung zwischen der dritten Vorrichtung 3 und der zweiten Vorrichtung 2), oder auch in verschiedenen Kommunikationssitzungen.

Die Übertragung dieser Informationen kann von der dritten Vorrichtung 3 zu der zweiten Vorrichtung 2 zumindest teilweise drahtlos (z.B. über Mobilfunk oder WLAN) erfolgen, insbesondere wenn es sich bei der zweiten Vorrichtung 2 um ein tragbares Nutzergerät (z.B. ein Mobiltelefon) od. ein tragbares Zustellergerät (z.B. einen Handscanner) handelt. Die Übertragung muss dabei nicht direkt erfolgen, sondern kann über ein oder mehrere Zwischenstationen erfolgen, wie nachfolgend noch genauer erörtert wird. Wenn es sich bei der zweiten Vorrichtung 2 um einen Tag (z.B. einen RFID- oder NFC-Tag) handelt, ist die Übertragung der Informationen logisch zu verstehen und kann beispielsweise bedeuten, dass die Informationen an einen Server eines Produktionssystems für die Tags übermittelt und dort in die Tags eingespeichert werden.

Der dritte Schlüssel H₃ und der vierte Schlüssel H₄ bilden dabei wiederum ein Schlüsselpaar (H₃, H₄), das beispielsweise symmetrisch sein kann, also H₃=H₄=H, oder asymmetrisch sein kann, also H₃≠H₄.

Von den Informationen, die von der dritten Vorrichtung 3 an die zweite Vorrichtung 2 übermittelt werden, wird grundsätzlich alle Information, bis auf den dritten Schlüssel H₃, von der zweiten Vorrichtung 2 an die erste Vorrichtung 1 weiter kommuniziert und dann in der ersten Vorrichtung 1 zur Prüfung verwendet, ob diese Informationen authentisch und integer sind und ob - im Falle der Zugangsberechtigungsinformation B - dem Bediener der zweiten Vorrichtung 2 Zugang gewährt werden darf.

Der dritte Schlüssel H₃ wird dabei in der zweiten Vorrichtung 2 gespeichert und beispielsweise im Rahmen der gegenseitigen Authentisierung zwischen der zweiten Vorrichtung 2 und der ersten Vorrichtung 1 eingesetzt, wobei letztere das Pendant zu dem dritten Schlüssel H₃, nämlich den vierten Schlüssel H₄, in verschlüsselter Form (Information A) übermittelt bekommen hat und diesen nach Entschlüsselung zumindest zeitweise speichert.

Zwischen der zweiten Vorrichtung 2 und der ersten Vorrichtung 1 (und beispielsweise lediglich zwischen diesen) wird ferner zeitliche Information T (auch als Zeitsynchronisationsinformation T bezeichnet) mit einer zugehörigen Prüfinformation übertragen.

Fig. 2 zeigt eine schematische Darstellung einer beispielhaften Ausführungsform einer Vorrichtung 5 gemäß der vorliegenden Erfindung. Vorrichtung 5 kann beispielsweise die zweite Vorrichtung 2 oder die erste Vorrichtung 1 der Fig. 1 repräsentieren.

Vorrichtung 5 umfasst einen Prozessor 50 mit zugeordnetem Arbeitsspeicher 52 und Programmspeicher 51. Der Prozessor führt beispielsweise Programmanweisungen aus, die im Programmspeicher 51 gespeichert sind. Die Programmanweisungen führen das Verfahren gemäß dem ersten Aspekt der Erfindung aus und/oder steuern dieses. Damit enthält der Programmspeicher 51 ein Computerprogramm nach dem ersten Aspekt der Erfindung und stellt ein Computerprogrammprodukt zu dessen Speicherung dar.

Der Prozessor 50 umfasst eine Uhr 501, beispielsweise eine Echtzeituhr. Die Uhr 501 kann allerdings auch eine von dem Prozessor 50 separate Einheit darstellen. Die Uhr 501 kann beispielsweise das Datum und die Zeit, beispielsweise mit einer Auflösung von Sekunden oder Hundertstel Sekunden messen. Allerdings kann die Uhr 501 eine Sollwertabweichung aufweisen, also eine Abweichung der von der Uhr angezeigten Zeit von einer tatsächlichen Zeit. Die Uhr 501 wird daher gemäß beispielhaften Ausführungsformen der Erfindung mit einer externen zeitlichen Information synchronisiert, beispielsweise indem die externe zeitliche Information als neue zeitliche Information der Uhr übernommen wird.

Der Programmspeicher 51 kann beispielsweise ein persistenter Speicher, wie beispielsweise ein Read-Only-Memory (ROM)-Speicher sein. Der Programmspeicher kann beispielsweise fest mit dem Prozessor 50 verbunden sein, kann aber alternativ auch lösbar mit dem Prozessor 50 verbunden sein, beispielsweise als Speicherkarte, Diskette oder optisches Datenträgermedium (z.B. eine CD oder DVD). In dem Programmspeicher 51, oder in einem separaten Speicher, können auch weitere Informationen abgespeichert sein. Falls Vorrichtung 5 die zweite Vorrichtung 2 ist, können zu im Programmspeicher 51 beispielsweise von der dritten Vorrichtung 3 erhaltene Informationen gespeichert werden (insbesondere B, V, A, H₃). Falls Vorrichtung 5 die erste Vorrichtung 1 ist, können zu den im Programmspeicher 51 gespeicherten Informationen der Schlüssel S₂ zählen sowie Bezugsinformationen, anhand derer erhaltene Zugangsberechtigungsparameter daraufhin geprüft werden, ob sie jeweils zur Gewährung von Zugang berechtigen (z.B. eine Kennung der Zugangskontrollvorrichtung, etc.).

Der Arbeitsspeicher 52 wird beispielsweise zur Speicherung temporärer Ergebnisse während der Abarbeitung der Programmanweisungen genutzt, es handelt sich hierbei beispiels-weise um einen flüchtigen Speicher, wie beispielsweise einen Random-Access-Memory (RAM)-Speicher.

Der Prozessor 50 ist ferner operativ mit einer Kommunikationseinheit 53 verbunden, mit der beispielsweise ein Informationsaustausch mit externen Vorrichtungen möglich ist.

Wenn die Vorrichtung 5 die zweite Vorrichtung 2 in Form eines Nutzergeräts oder Zustellergeräts repräsentiert, kann die Kommunikationseinheit 53 beispielsweise folgendes umfassen:
- eine Mobilfunkschnittstelle zum Empfang von Informationen von der dritten Vorrichtung 3 (die diese Information beispielsweise an einen Schnittstellenserver eines mobilen Kommunikationsnetzes zur Übertragung an die zweite Vorrichtung 2 übergeben hat),
- eine Schnittstelle zum drahtlosen (z.B. per WLAN) oder drahtgebundenen Empfang (z.B. über eine Dockingstation) von Informationen von einer vierten Vorrichtung (beispielsweise ein Zustellbasis-Personalcomputer (ZBPC)), an die die dritte Vorrichtung 3 diese Informationen zur Übertragung an die zweite Vorrichtung 2 übertragen hat)
- eine Funkschnittstelle zur Kommunikation mit der Zugangskontrollvorrichtung 2, insbesondere eine Bluetooth-Schnittstelle und/oder eine RFID-Schnittstelle und/oder NFC-Schnittstelle.

Wenn die Vorrichtung 5 die zweite Vorrichtung 2 in Form eines Tags repräsentiert, kann die Kommunikationseinheit 53 beispielsweise folgendes umfassen:
- eine Funkschnittstelle zur Kommunikation mit der ersten Vorrichtung 1, insbesondere eine Bluetooth-Schnittstelle und/oder eine RFID-Schnittstelle und/oder eine NFC-Schnittstelle.

Die Vorrichtung 5 kann auch weitere Komponenten enthalten, beispielsweise eine graphische Benutzerschnittstelle, um einen Bediener eine Interaktion mit der Vorrichtung 5 zu gestatten, insbesondere falls Vorrichtung 5 eine dritte Vorrichtung 3 in Form eines Nutzergeräts oder Zustellergeräts darstellt. Falls Vorrichtung 5 ein Zustellergerät repräsentiert, kann beispielsweise eine Einheit zur insbesondere optischen Erfassung von Informationen (z.B. ein Scanner) von der Vorrichtung 5 umfasst sein, und/oder beispielsweise eine Benutzerschnittstelle zur Erfassung von handschriftlichen Eingaben wie z.B. einer Unterschrift.

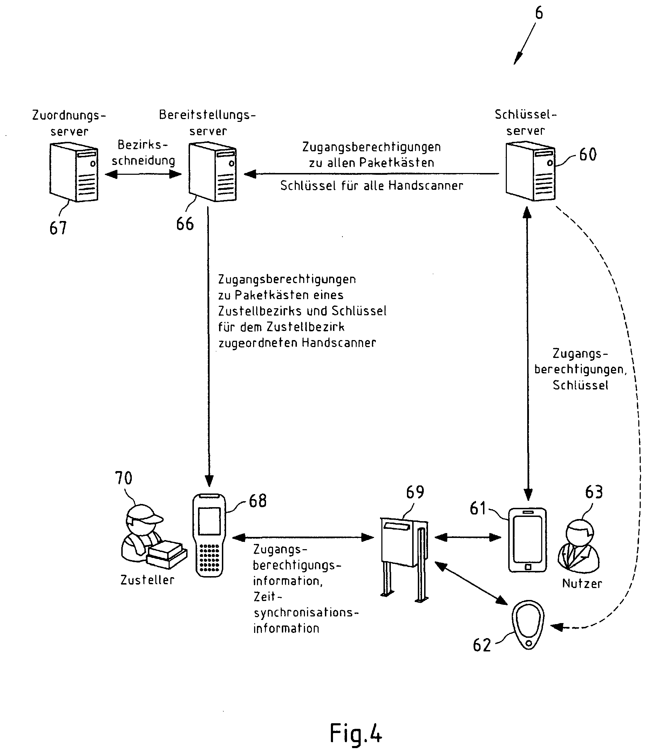

Falls Vorrichtung 5 eine erste Vorrichtung 1 repräsentiert, kann ebenfalls eine beispielsweise optische und/oder akustische Benutzerschnittstelle vorgesehen sein, um beispielsweise Informationen über den Status der ersten Vorrichtung 1 und/oder über den Erfolg eines Versuchs, mit Zugangsberechtigungsinformation Zugang an der ersten Vorrichtung 1 gewährt zu bekommen, an den Bediener ausgeben zu können. Die Vorrichtung 5 kann im Falle einer ersten Vorrichtung 1 auch Steuerungsmittel zur Steuerung einer Verriegelungseinheit (z.B. zum Entriegeln derselben) in Abhängigkeit der Entscheidung, ob Zugang gewährt werden kann, umfassen. Die Verriegelungseinheit kann beispielsweise ein insbesondere elektronisch ansteuerbares Schloss umfassen. Im Kontext der Beschreibung der Ausführungsbeispiele der Fig. 4-7 wird eine Einheit umfassend zumindest den Prozessor 50, die Speicher 51 und 52 und die Verriegelungseinheit als "Schloss" bezeichnet. Die Vorrichtung 5 kann im Falle einer ersten Vorrichtung 1 zusätzlich auch ein oder mehrere Sensoren, beispielsweise zur Detektion eines aktuellen Schließzustands der Verriegelungseinheit, umfassen. Die Vorrichtung 5 kann im Falle einer ersten Vorrichtung 1 beispielsweise eine Batterie (z.B. wiederaufladbar oder auch nicht) umfassen, insbesondere als einzige Stromversorgung. Die Vorrichtung 5 kann im Falle einer ersten Vorrichtung 1 beispielsweise keinen Anschluss an ein drahtgebundenes Netzwerk aufweisen, also insbesondere keinen Anschluss an ein LAN, und/oder kann beispielsweise keinen Anschluss an ein WLAN oder ein Mobilfunknetz (insbesondere ein zellulares Mobilfunknetz) aufweisen.

Die Vorrichtung 5 kann im Falle einer zweiten Vorrichtung 2 in Form eines Tags beispielsweise keine eigene Stromversorgung umfassen und ihre Energie zur Kommunikation aus dem Feld einer Leseeinheit der ersten Vorrichtung 1 beziehen. Es kann bei einem solchen Tag auch keine Benutzerschnittstelle vorhanden sein.

Die Komponenten 50-53 können beispielsweise zusammen als Modul oder Einheit ausgebildet sein, oder können zumindest teilweise als Einzelmodule ausgebildet sein, um eine leichte Austauschbarkeit bei etwaigen Defekten zu gewährleisten.

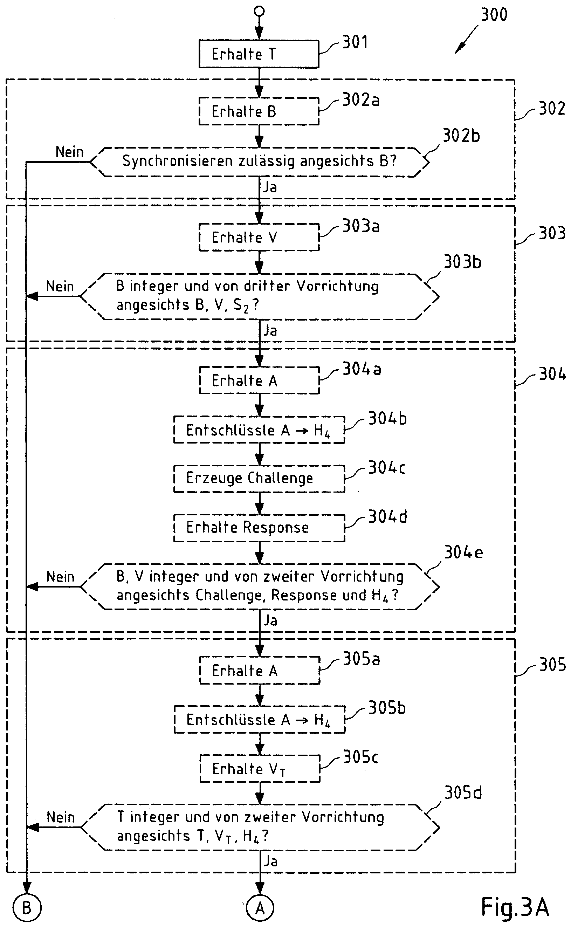

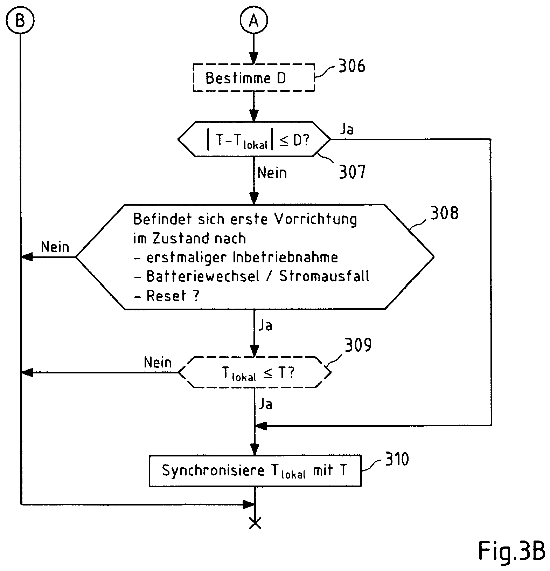

Fig. 3A/B zeigt ein Flussdiagramm einer beispielhaften Ausführungsform eines Verfahrens 300 gemäß der vorliegenden Erfindung. Das Verfahren wird beispielsweise von der ersten Vorrichtung 1 der Fig. 1 ausgeführt, beispielsweise durch deren Prozessor 50 (siehe Fig. 2), wobei der Programmspeicher 51 dann Programcode enthalten kann, der den Prozessor 50 zur Ausführung oder Steuerung des Verfahrens 300 bewegt.

In Fig. 3A/B sind optionale Verfahrensschritte gestrichelt und - zumindest hinsichtlich dieser Ausführungsform, aber nicht zwingend für die Erfindung an sich - notwendige Schritte mit durchgezogenen Linien dargestellt. Insbesondere die Aktionen der Schritte 302, 303, 304, 305, 306 und 309 sind dabei optional. Wenn diese nicht vorhanden sind, startet das Flussdiagramm beispielsweise direkt mit Schritt 306. Dementsprechend soll das Flussdiagramm der Fig. 3A/B auch lediglich so offenbart verstanden werden, dass es mit Schritt 306 in Fig. 3B beginnt und das eingekreiste Verbindungselement zu den Schritten in Fig. 3A nicht existiert.

In einem Schritt 301 wird zunächst zeitliche Information T an der ersten Vorrichtung 1 empfangen, beispielsweise über die Kommunikationsschnittstelle 53 der ersten Vorrichtung 1. Diese zeitliche Information T stammt insbesondere von der zweiten Vorrichtung 2 und beinhaltet z.B. das von einer Uhr der Vorrichtung 2 erfasste Datum und die Uhrzeit im Zeitpunkt des Erfassens.

Optional kann sich nun ein Schritt 302 mit Teilschritten 302a-302b anschließen, falls von der zweiten Vorrichtung 2 Zugangsberechtigungsinformation B an die erste Vorrichtung 1 kommuniziert wird. Die Zugangsberechtigungsinformation B würde dann in Schritt 302a an der ersten Vorrichtung 1 erhalten (Schritt 302a) und in Schritt 302b geprüft, ob ein Zugangsberechtigungsparameter in der Zugangsberechtigungsinformation vorhanden ist der anzeigt, dass eine Synchronisation der Uhr 501 der ersten Vorrichtung zulässig ist. Ein derartiger Zugangsberechtigungsparameter ist beispielsweise der Zugangsberechtigungsparameter "Permissions", der später noch diskutiert werden wird. Wenn in Schritt 302b festgestellt wird, dass eine Berechtigung zur Synchronisation vorliegt, schreitet das Flussdiagramm 300 voran zum Schritt 303a, anderenfalls wird die Bearbeitung abgebrochen und zum Ende des Flussdiagramms 300 gesprungen.

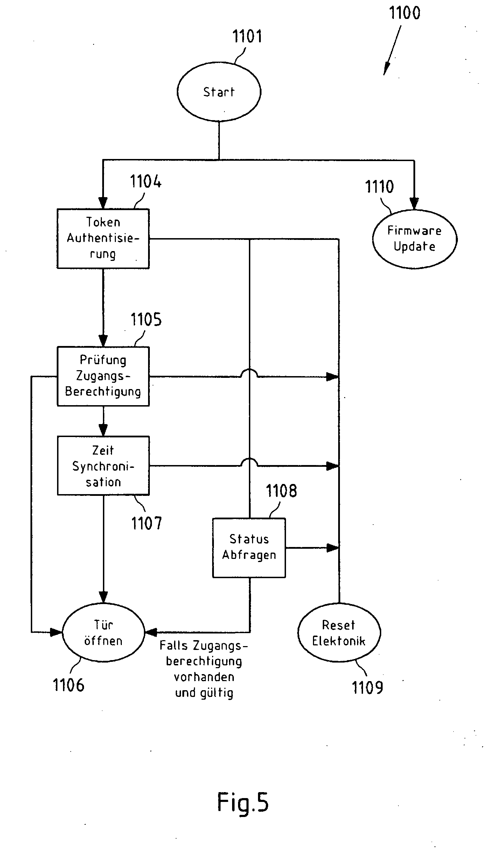

In Schritt 302b können optional auch ein oder mehrere weitere Zugangsberechtigungsparameter aus B gegen jeweilige Bezugsgrößen verglichen werden, um festzustellen, dass die Zugangsberechtigungsinformation gültig und damit auch das Synchronisieren zulässig ist. Beispielsweise können die in der Zugangsberechtigungsinformation enthaltenen Zugangsberechtigungsparameter LockID (also eine insbesondere eindeutige Kennung des Schlosses) und/oder MaxUses (also eine Obergrenze für die Anzahl erlaubter Nutzungen) gegen jeweilige in der ersten Vorrichtung 1 zumindest im Zeitpunkt des Prüfens vorhandene Bezugsinformationen (z.B. dort gespeicherte LockID, dort zu MaxUses korrespondierender Zähler) gegengeprüft werden und nur bei Übereinstimmung von einer gültigen Zugangsberechtigung und der Zulässigkeit der Synchronisierung ausgegangen werden (vgl. dazu die Beschreibung von Schritt 404 des Flussdiagramms 400 der Fig. 5 unten). In der Zugangsberechtigungsinformation potentiell enthaltene weitere Zugangsberechtigungsparameter, die die zeitliche Gültigkeit der Zugangsberechtigung anzeigen (z.B. Beginn und Ende des Gültigkeitszeitraums) werden bei der Prüfung, ob eine zulässige Zugangsberechtigung vorliegt und somit eine Synchronisation der Uhr zulässig ist, vorzugsweise nicht geprüft, da dann das Risiko bestünde, dass die Zugangsberechtigung - etwa aufgrund einer starken Sollzeitabweichung der Uhr - in zeitlicher Hinsicht nicht mehr als gültig angesehen würde und eine Synchronisierung unmöglich machen würde. Der Nachteil, dass die Zugangsberechtigung hinsichtlich der Synchronisation - aufgrund der fehlenden Berücksichtigung der den Gültigkeitszeitraum definierenden Zugangsberechtigungsparameter - quasi zeitlich unbeschränkt gültig ist, kann dadurch abgefangen werden, dass erfindungsgemäß den Freiheiten für die Vornahme der Synchronisation - und damit möglichem Missbrauch - enge Grenzen gesetzt werden, wie unten zu den Schritten 306-310 erläutert wird.

Allerdings kann im Schritt 302b optional zusätzlich zu der Prüfung, ob ein Zugangsberechtigungsparameter in der Zugangsberechtigungsinformation vorhanden ist, der anzeigt, dass eine Synchronisation der Uhr 501 der ersten Vorrichtung zulässig ist, geprüft werden, ob die zeitliche Information T innerhalb eines Gültigkeitszeitraums für die Zugangsberechtigung liegt, der beispielsweise durch einen oder mehrere in der Zugangsberechtigungsinformation enthaltene Zugangsberechtigungsparameter angezeigt wird (z.B. in Form von Information für den Beginn und das Ende des Gültigkeitszeitraums). Beispielsweise müssen dann sowohl die Prüfung, ob ein Zugangsberechtigungsparameter in der Zugangsberechtigungsinformation vorhanden ist, der anzeigt, dass eine Synchronisation der Uhr 501 der ersten Vorrichtung zulässig ist, und die zusätzliche Prüfung, ob die zeitliche Information T innerhalb des Gültigkeitszeitraums für die Zugangsberechtigung liegt, erfolgreich verlaufen, damit der Schritt 302b insgesamt ein positives Prüfungsergebnis liefert, also der Schritt 303a ausgeführt und nicht direkt zum Ende des Flussdiagramms 300 verzweigt wird. Die zusätzliche Prüfung dient beispielsweise der Prüfung der Konsistenz der zeitlichen Information hinsichtlich des Gültigkeitszeitraums der Zugangsberechtigung, was beispielsweise deshalb vorteilhaft ist, weil der Gültigkeitszeitraum und die zeitliche Information von unterschiedlichen Entitäten stammen. Beispielsweise kann dadurch vermieden werden, dass bei einer fehlerhaften Uhr der zweiten Vorrichtung eine fehlerhafte Synchronisation der Uhr der ersten Vorrichtung erfolgt, weil die zeitliche Information nicht zu dem Gültigkeitszeitraum der von der dritten Vorrichtung erstellten Zugangsberechtigungsinformation passt. Der Gültigkeitszeitraum muss dabei nicht notwendigerweise auf die Verschaffung von Zugang (z.B. an der ersten Vorrichtung oder einer von dieser kontrollierten Vorrichtung) bezogen sein, sondern kann sich beispielsweise exklusiv auf die Vornahme der Synchronisation beziehen. Die Zugangsberechtigungsinformation kann also beispielsweise nicht zum Zugang berechtigen, aber sehr wohl die Synchronisation der Uhr ermöglichen und festlegen, in welchem Zeitraum (Gültigkeitszeitraum) dies möglich sein soll. Es ist aber ebenso gut möglich, dass der Gültigkeitszeitraum sowohl festlegt, wann Zugang möglich ist und wann eine Synchronisation (und/oder ein Einstellen) der Uhr möglich ist.

Beispielsweise kann dabei geprüft werden, ob die zeitliche Information größer oder größergleich einer Größe "NotBefore" und zugleich kleiner oder kleiner-gleich einer Größe "NotAfter" ist. Die Größe "NotBefore" entspricht dabei beispielsweise dem unten noch genauer diskutierten Zugangsberechtigungsparameter "NotBeforeDate" (wenn der Gültigkeitszeitraum beispielsweise nur tagesgenau angegeben wird) oder einer Kombination der unten noch genauer definierten Zugangsberechtigungsparameter "NotBeforeDate" und "StartTimeOfDate" (wenn der Gültigkeitszeitraum beispielsweise feiner als tagesgenau, z.B. stundengenau oder minutengenau, angegeben wird). Die Größe "NotAfter" entspricht dabei beispielsweise dem unten noch genauer diskutierten Zugangsberechtigungsparameter "NotAfterDate" oder einer Kombination der unten noch genauer definierten Zugangsberechtigungsparameter "NotAfterDate" und "EndTimeOfDate".

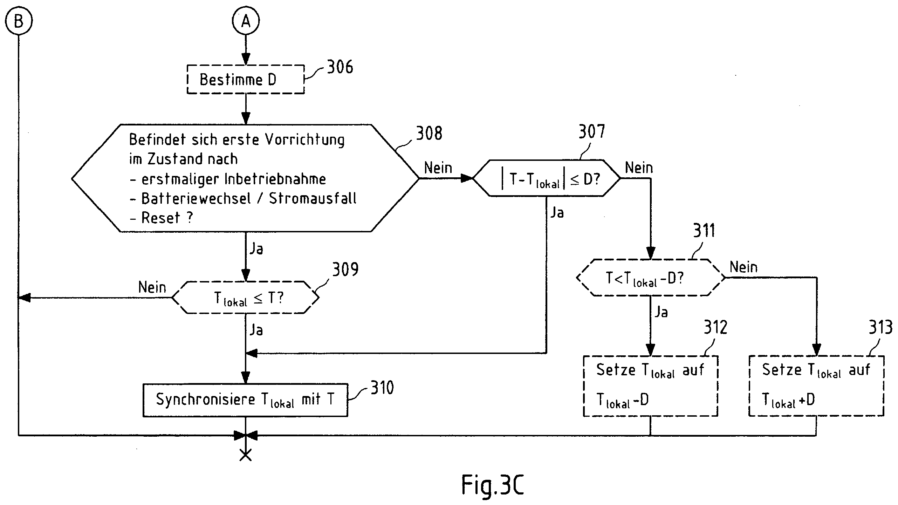

Zusätzlich oder alternativ kann in Schritt 302b geprüft werden, ob das Datum der zeitlichen Information T später ist als das Datum der letzten Synchronisation. Dadurch kann beispielsweise vermieden werden, dass mehr als einmal an einem Tag eine Synchronisation erfolgt. Dies kann beispielsweise angesichts der Schritte 312 und 313 der Fig. 3C nachteilig sein. Eine Variable, die den Zeitpunkt der jeweils letzten Synchronisation oder zumindest das Datum der letzten Synchronisation angibt, kann beispielsweise in der ersten Vorrichtung 1 gespeichert sein, beispielsweise als Bezugsinformation. Diese Variable kann beispielsweise jedes Mal, wenn die lokale Zeit Tₗₒₖₐₗ der Uhr 501 der ersten Vorrichtung synchronisiert wird, aktualisiert werden. Beispielsweise wird die Variable bei jeder Synchronisation auf denselben Wert gesetzt wie die (synchronisierte) lokale Zeit Tₗₒₖₐₗ der Uhr 501. Das Setzen dieser Variable kann also beispielsweise im Schritt 310 der Fig. 3B oder in den Schritten 310, 312 oder 313 der Fig. 3C erfolgen.

Beispielsweise müssen dann sowohl die Prüfung, ob ein Zugangsberechtigungsparameter in der Zugangsberechtigungsinformation vorhanden ist, der anzeigt, dass eine Synchronisation der Uhr 501 der ersten Vorrichtung zulässig ist, und die Prüfung, ob das Datum der zeitlichen Information T größer ist als das Datum der letzten Synchronisation (und beispielsweise auch die Prüfung, ob die zeitliche Information T innerhalb des Gültigkeitszeitraums für die Zugangsberechtigung liegt), erfolgreich verlaufen, damit der Schritt 302b insgesamt ein positives Prüfungsergebnis liefert, also der Schritt 303a ausgeführt und nicht direkt zum Ende des Flussdiagramms 300 verzweigt wird.
Die Prüfung der weiteren Zugangsberechtigungsparameter, die die zeitliche Gültigkeit der Zugangsberechtigung anzeigen, gegen die Uhr der ersten Vorrichtung 1 kann aber natürlich auch nach der Synchronisation der Uhr vorgenommen werden, insbesondere wenn die Zugangsberechtigung sowohl zur Synchronisation als auch zum Zugang an der ersten Vorrichtung 1 oder einer von dieser kontrollierten Vorrichtung berechtigt.

Es ist aber auch denkbar, die Prüfung der weiteren Zugangsberechtigungsparameter, die die zeitliche Gültigkeit der Zugangsberechtigung anzeigen, gegen die Uhr der ersten Vorrichtung vor der Synchronisation mit der in der Zugangsberechtigung enthaltenen zeitlichen Information durchzuführen und erst bei festgestellter Gültigkeit der Zugangsberechtigung auch in zeitlicher Hinsicht die Synchronisation durchzuführen. Falls eine Sollwertabweichung der Uhr so stark sein sollte, dass die zeitliche Information der Uhr nicht mehr im durch die weiteren Zugangsberechtigungsparameter definierten Gültigkeitsintervall liegen sollte und damit die Zugangsberechtigung insgesamt als ungültig angesehen werden sollte, kann beispielsweise eine (insbesondere speziell nur zur Synchronisation gedachte) Zugangsberechtigung mit deutlich vergrößertem Gültigkeitszeitraum verwendet werden, um die Uhr zu synchronisieren.

Schritt 303 stellt wiederum einen optionalen Schritt mit Teilschritten 303a-303b dar, der beispielsweise durchgeführt werden kann, falls die in Schritt 302a erhaltene Zugangsberechtigungsinformation von der dritten Vorrichtung 3 unter Verwendung des ersten Schlüssels mit Prüfinformation V (z.B. als MAC oder digitale Signatur) versehen wurde. Derartige Prüfinformation V würde dann in Schritt 303a empfangen und es würde dann in Schritt 303b basierend auf B, V und S₂ geprüft, ob B integer ist und von der dritten Vorrichtung 3 stammt (also auch authentisch hinsichtlich der dritten Vorrichtung 3 ist). Wenn dies nicht der Fall ist, wird die Bearbeitung abgebrochen und zum Ende des Flussdiagramms 300 gesprungen, anderenfalls schreitet das Flussdiagramm 300 zum nächsten Schritt 304a voran. Schritt 304 stellt wiederum einen optionalen Schritt mit Teilschritten 304a-304d dar, der beispielsweise durchgeführt werden kann, falls zwischen der ersten Vorrichtung 1 und der zweiten Vorrichtung 2 ein Authentisierungsverfahren in Form eines Challenge-Response-Verfahrens durchgeführt wird. Dies beruht auf der Kenntnis des Schlüssels H₃ in der zweiten Vorrichtung 2 und der Kenntnis des vierten Schlüssels H₄ in der ersten Vorrichtung 1. Im Schritt 304a wird dazu eine Authentisierungsinformation A erhalten, die den vierten Schlüssel H₄ in verschlüsselter Form enthält (verschlüsselt mit dem ersten Schlüssel S₁). Im Schritt 304b wird A mit S₂ entschlüsselt, um H₄ zu erhalten. Dann wird eine Challenge (z.B. als Zufallszeichenkette, beispielsweise als binäre Zufallszeichenkette) erzeugt und in Schritt 304d eine Response auf die Challenge erhalten. Die Response wird in der zweiten Vorrichtung 2 beispielsweise unter Verwendung des Schlüssels H₃ als kryptographische Operation über die Challenge und die Informationen B und/oder V erzeugt, beispielsweise als MAC oder digitale Signatur. In Schritt 304e wird dann anhand von B und/oder V, der Challenge, der Response und H₄ geprüft, ob B und/oder V integer sind und von der zweiten Vorrichtung 2 stammen (also authentisch hinsichtlich der zweiten Vorrichtung 2 sind). Wenn dies nicht der Fall ist, wird die Bearbeitung abgebrochen und zum Ende des Flussdiagramms 300 gesprungen, anderenfalls schreitet das Flussdiagramm 300 zum nächsten Schritt 305a voran.

Schritt 305 stellt wiederum einen optionalen Schritt mit Teilschritten 305a-305c dar, der beispielsweise durchgeführt werden kann, falls die zweite Vorrichtung 2 eine Prüfinformation V_{T} über die zeitliche Information T berechnet, anhand der die erste Vorrichtung die Integrität und Authentizitätder zeitlichen Information T prüfen kann. Dabei kann es sich wiederum beispielsweise um eine digitale Signatur oder einen MAC der zeitlichen Information handeln, die unter Verwendung des dritten Schlüssels H₃ berechnet werden. Im Schritt 305a wird dazu - falls nicht bereits im optionalen Schritt 304a geschehen - auch die Authentisierungsinformation A empfangen. Es würde dann im Schritt 305b-falls nicht bereits im optionalen Schritt 304b geschehen - der vierte Schlüssel H₄ durch Entschlüsseln von A unter Verwendung von S₂ gewonnen. Im Schritt 305c würde dann die Prüfinformation V_{T} empfangen, Im Schritt 305d würde dann anhand T, V_{T} und H₄ geprüft, ob T integer ist und von der zweiten Vorrichtung 2 stammt (also authentisch hinsichtlich der zweiten Vorrichtung 2 ist). Wenn dies nicht der Fall ist, wird die Bearbeitung abgebrochen und zum Ende des Flussdiagramms 300 gesprungen, anderenfalls schreitet das Flussdiagramm 300 zum nächsten Schritt 306 voran.

Schritt 306 ist optional und wird nur durchgeführt, falls im nächsten Schritt 307 statt einem vordefinierten Schwellwert D (z.B. 10 min) ein nach einer vordefinierten Regel bestimmter (dynamischer) Schwellwert D verwendet werden soll. Der in Schritt 306 bestimmte Schwellwert D kann beispielsweise zumindest von einer seit der letzten Synchronisation oder dem Stellen der Uhr 501 der ersten Vorrichtung 1 verstrichenen Zeit und einer durchschnittlichen Sollwertabweichung pro Zeiteinheit abhängen, wie bereits erläutert wurde.

In Schritt 307 wird dann entweder mit dem in Schritt 306 bestimmten Schwellwert D oder mit einem vordefinierten Schwellwert D geprüft, ob eine Abweichung zwischen der empfangenen Zeit T und der lokalen Zeit Tₗₒₖₐₗ der Uhr 501 der ersten Vorrichtung kleiner-oder-gleich dem Schwellwert D ist. Dies entspricht der oben bereits diskutierten "zweiten Prüfung". Wenn diese zweite Prüfung im Schritt 308 ein positives Ergebnis erzielt, kann eine Synchronisation der lokalen zeitlichen Information Tₗₒₖₐₗ mit der empfangenen zeitlichen Information T erfolgen (Schritt 310). Anderenfalls wird in Schritt 308 geprüft ("erste Prüfung"), ob nicht das Vorliegen eines speziellen Zustands (erste Vorrichtung 1 befindet sich in einem Zustand nach erstmaliger Inbetriebnahme, nach Batteriewechsel oder sonstigem Stromausfall oder nach einem Reset) es rechtfertigt, eine Synchronisation trotz einer größeren zeitlichen Abweichung von T und Tₗₒₖₐₗ zu gestatten. Falls ein solcher Zustand vorliegen sollte, kann entweder in Schritt 310 die Synchronisation der lokalen zeitlichen Information Tₗₒₖₐₗ der Uhr 501 der ersten Vorrichtung 1 mit der empfangenen zeitlichen Information T erfolgen, oder vorher noch der weitere optionale Prüfschritt 309 durchgeführt werden, in dem geprüft wird, ob die empfangene Zeit T gleich zu der oder später als die lokale Zeit Tₗₒₖₐₗ ist. Wenn dies nicht der Fall ist, kann die Synchronisation verweigert und zum Ende des Flussdiagramms 300 gesprungen werden. Anderenfalls wird die Synchronisation in Schritt 310 durchgeführt.

Alternativ kann beispielsweise im Schritt 309 geprüft werden, ob die empfangene Zeit T gleich zu der oder größer als die Differenz Tₗₒₖₐₗ - D zwischen der lokalen Zeit Tₗₒₖₐₗ und dem Schwellwert D ist. Dadurch wird bei dieser alternativen Prüfung also eine durch den Schwellwert D verkörperte Toleranz mit berücksichtigt. Wenn dies nicht der Fall ist, kann die Synchronisation verweigert und zum Ende des Flussdiagramms 300 gesprungen werden. Anderenfalls wird die Synchronisation in Schritt 310 durchgeführt.

Im Flussdiagramm 300 kann beispielsweise die "erste Prüfung" 308 (gfs. mit dem Schritt 309) vor der "zweiten Prüfung" 307 stattfinden. Auch die optionalen Schritte 302-305 können in der Reihenfolge vertauscht werden. Dabei ist insbesondere anzumerken, dass die Informationen B, V, V', A, T, V_{T} nicht notwendigerweise separat voneinander empfangen werden müssen; diese Informationen können beispielsweise zumindest in Gruppen von zwei oder mehreren Informationen zusammen empfangen werden, und können beispielsweise alle in der gleichen Kommunikationssitzung von der zweiten Vorrichtung 2 an die erste Vorrichtung 1 kommuniziert werden.

Anstelle der "zweiten Prüfung" im Schritt 307 kann auch die bereits erläuterte vereinfachte "dritte Prüfung" durchgeführt werden, der zufolge lediglich geprüft wird, ob T und Tₗₒₖₐₗ das gleiche Datum aufweisen und bei Vorliegen des gleichen Datums eine Synchronisation gestattet wird. Die "zweite Prüfung" im Schritt würde dann lediglich durch die "dritte Prüfung" und das Flussdiagramm 300 ansonsten unverändert belassen.

Die Fig. 3C zeigt ein alternatives Ende des Flussdiagramms 300 der Fig. 3A/3B. Anders ausgedrückt bilden die Fig. 3A und 3C eine zu dem Flussdiagramm 300 der Fig. 3A/3B alternative Ausführungsform eines Verfahrens gemäß der vorliegenden Erfindung. Das Verfahren wird wiederum beispielsweise von der ersten Vorrichtung 1 der Fig. 1 ausgeführt, beispielsweise durch deren Prozessor 50 (siehe Fig. 2), wobei der Programmspeicher 51 dann Programcode enthalten kann, der den Prozessor 50 zur Ausführung oder Steuerung des Verfahrens bewegt.

In Fig. 3C sind Blöcke, die denen der Fig. 3B entsprechen, mit gleichen Bezugszeichen versehen.

In einem Schritt optionalen Schritt 306 wird gemäß Fig. 3C wiederum ein Schwellwert D bestimmt, falls kein vordefinierter Schwellwert D zum Einsatz kommt, wie bereits oben zu Fig. 3B beschrieben wurde. Auf Schritt 306 folgt der Schritt 308, der wie in Fig. 3B ausgestaltet ist. Bei positivem Prüfungsergebnis des Schritts 308 wird der optionale Schritt 309 durchgeführt, der bereits zu Fig. 3B oben beschrieben wurde. Wenn die Prüfung im Schritt 309 positiv verläuft - oder wenn der Schritt 309 nicht vorhanden ist - wird der Schritt 310 ausgeführt und eine Synchronisation der lokalen Zeit Tₗₒₖₐₗ unter Verwendung der zeitlichen Information T vorgenommen, also beispielsweise die lokale Zeit Tₗₒₖₐₗ auf den Wert der zeitlichen Information T gesetzt. Wenn die Prüfung in Schritt 309 negativ ausfällt, findet hingegen keine Synchronisation unter Verwendung der zeitlichen Information T statt.

Im Unterschied zu Fig. 3B wird bei negativem Prüfungsergebnis des Schritts 308 nicht zum Ende des Verfahrens verzweigt (also keine Synchronisation durchgeführt), sondern zum Schritt 307 verzweigt, der funktional wiederum dem Schritt 307 der Fig. 3B entspricht. Bei positiver Prüfung im Schritt 307 verzweigt das Verfahren zum Schritt 310.

Wenn die Prüfung im Schritt 307 negativ verläuft, also die Abweichung zwischen der zeitlichen Information T und der lokalen Zeit Tₗₒₖₐₗ größer ist als der Schwellwert D, können sich optional die Schritte 311-313 anschließen (anderenfalls kann das Verfahren dann ohne Synchronisation zum Ende verzweigen). In den Schritten 311-313 wird zwar keine Synchronisation unter Verwendung der zeitlichen Information T durchgeführt (im Gegensatz zum Schritt 310), aber zumindest in dem durch den Schwellwert D gesetzten Rahmen eine Korrektur der lokalen Zeit Tₗₒₖₐₗ durchgeführt. Dazu wird im Schritt 311 geprüft, ob die zeitliche Information kleiner ist als die Differenz Tₗₒₖₐₗ - D. Wenn dies der Fall ist, wird die lokale Zeit Tₗₒₖₐₗ im Schritt 312 auf den Wert Tₗₒₖₐₗ-D eingestellt (also die aktuelle lokale Zeit Tₗₒₖₐₗ um den Wert D reduziert). Wenn dies nicht der Fall ist, wird die lokale Zeit Tₗₒₖₐₗ im Schritt 313 auf den Wert Tₗₒₖₐₗ + D eingestellt (also die aktuelle lokale Zeit Tₗₒₖₐₗ um den Wert D erhöht).Damit findet also eine Korrektur der lokalen Zeit Tₗₒₖₐₗ in Richtung der zeitlichen Information T statt, aber nur in dem durch den Schwellwert D gesetzten Rahmen. Dies kann im Einzelfall noch ausreichend sein, um eine nur in geringem Umfang falsch gehende Uhr der ersten Vorrichtung auf einen Wert (Tₗₒₖₐₗ-D bzw. Tₗₒₖₐₗ + D) zu korrigieren, der zwar nicht dem Wert T entspricht, aber dennoch erreicht, dass die aktualisierte lokale Zeit Tₗₒₖₐₗ nun innerhalb des Gültigkeitszeitraums der Zugangsberechtigung liegt und beispielsweise (bei Vorliegen einer entsprechenden Berechtigung in den "Permissions") Zugang gewährt werden kann, vgl. dazu den Schritt 1106 der Fig. 5.

Im Folgenden wird anhand der Fig. 4 ein konkretisiertes Ausführungsbeispiel eines Zugangskontrollsystems 6 vorgestellt, in dem Ausführungsformen des ersten Aspekts der Erfindung eingesetzt werden können. Bei diesem Zugangskontrollsystem 6 ist die dritte Vorrichtung 3 als Schlüsselserver 60 (siehe Fig. 4) ausgebildet, die ersten Vorrichtungen 1 sind als Paketkästen 69 (oder den Zugang kontrollierende Einheiten davon, insbesondere "Schlösser") ausgebildet, die Nutzern 63 (z.B. für die Nutzung der Paketkästen registrierten Nutzern) zugeordnet sind, und die zweiten Vorrichtungen 2 sind als Handscanner 68 oder Tags 74 von Zustellern 70 oder als Mobiltelefone 61 oder Tags 62 von Nutzern 63 ausgebildet, die insgesamt als "Token" bezeichnet werden. Die Nutzer 63 sind hier beispielsweise die Besitzer von Paketkästen oder andere Personen (z.B. des gleichen Haushalts oder der Nachbarschaft), die sich registriert haben, um in einem bestimmten Paketkasten 69 Sendungen zu empfangen oder aus diesem abholen lassen zu können. Die Nutzer 63 werden auch als Paketkastennutzer bezeichnet. Die Zusteller 70 können beispielsweise Paketzusteller, Verbundzusteller (die sowohl Briefe als auch Pakete zustellen) oder Briefzusteller sein. Für die Paketzusteller und Verbundzusteller ist es beispielsweise wichtig, den Paketkasten öffnen zu können, um Pakete in diesen zuzustellen oder aus diesem abholen zu können. Für Verbundzusteller und Briefzusteller ist es beispielsweise wichtig, den Paketkasten öffnen zu können, um großformatige Briefe (z.B. Maxibriefe), die u.U. nicht durch einen Briefschlitz des Paketkastens passen, durch Öffnung des Paketkastens in diesen zustellen zu können.

Die in der Fig. 4 und der zugehörigen Beschreibung vorgenommene Konkretisierung der Komponenten 1, 2 und 3 dient allerdings lediglich zur Erläuterungszwecken und soll nicht als wesentlich oder einschränkend verstanden werden. Insbesondere soll die Interaktion der dergestalt konkretisierten Komponenten 1, 2 und 3 auch in allgemeiner Form - also losgelöst von der konkreten Verkörperung dieser Komponenten - als offenbart verstanden werden. Dies gilt ebenfalls für die zu Erläuterungszwecken konkretisierten Übertragungstechniken, insbesondere Bluetooth und NFC, die lediglich als Beispiel für eine mögliche Form der drahtlosen Kommunikation zwischen zweiten Vorrichtungen 2 und ersten Vorrichtungen 1 verstanden werden sollen.

Bei einem Paketkasten 69 handelt es sich um einen Behälter mit zumindest einer verschließbarer Tür, der zumindest zur Aufnahme von Paketen eingerichtet ist, beispielweise zumindest eines Pakets mit den Abmessungen 45 x 35 x 20cm (was einen sog. "Packset L" entspricht), oder von zumindest zwei oder drei solcher Pakete. Der Paketkasten 69 kann auch ein Brieffach aufweisen (kann alternativ aber auch kein Brieffach aufweisen), in das beispielsweise durch einen Briefschlitz mit oder ohne abdeckender Klappe Briefe eingeworfen werden können. Das Brieffach kann mit einer eigenen Tür verschließbar sein (mit mechanischem oder elektronischem Schloss), oder kann alternativ über eine Tür des Paketkastens 69 zusammen mit einem zur Aufnahme der Pakete vorgesehenen Paketfach verschlossen werden. Wenn jeweils eine Tür für das Paketfach und eine Tür für das Brieffach vorgesehen sind, kann als erste Vorrichtung 1 beispielsweise eine gemeinsame Zugangskontrollvorrichtung vorgesehen sein, die je nach Zugangsberechtigung entweder eine Tür (z.B. die Tür des Paketfachs, z.B. für den Zusteller 70) öffnet oder beide Türen (z.B. für den Nutzer 63) öffnet. Der Paketkasten 69 kann zur Montage in oder an einer Wand, beispielsweise einer Hauswand, oder als freistehende Einheit zur Befestigung am Boden, z.B. vor einem Haus, vorgesehen sein. Der Nutzer 63 wird beispielsweise über Email und/oder SMS über neu zugestellte Sendungen (Pakete und/oder Briefe) benachrichtigt. Es ist auch möglich, dass der Nutzer 63 frankierte Sendungen in den Paketkasten 69 einlegt und online oder telefonisch eine Abholung beantragt. Wenn keine Abholung beauftragt wird, wird die Sendung u.U. etwas verzögert dann abgeholt, wenn ein Zusteller den Paketkasten das nächste Mal öffnet und die Sendung dort vorfindet. Als Beleg für eine abgeholte Sendung wird beispielsweise vom Zusteller ein Beleg im Paketkasten hinterlassen.

Der Schlüsselserver 60 wird beispielsweise in einem geeigneten Rechenzentrum eines Zustellunternehmens, insbesondere der Deutschen Post DHL, betrieben. Er erzeugt die erforderlichen Schlüssel, beispielsweise das symmetrische oder asymmetrische Schlüsselpaar S₁, S₂, von dem der erste Schlüssel S₁ im Schlüsselserver 60 verbleibt und der zweite Schlüssel S₂ im Schloss gespeichert wird, beispielsweise während dessen Produktion oder Inbetriebnahme, und das symmetrische oder asymmetrische Schlüsselpaar H₃, H₄. Die Schlüsselpaare S₁,S₂ können hinsichtlich jedes Paketkastens 69 unterschiedlich gewählt, aber auch gleich für einige oder alle Paketkästen 69 sein. Die Schlüsselpaare H₃, H₄ können beispielsweise hinsichtlich jedes Handscanners 68 gleich, oder unterschiedlich für einige oder alle Handscanner 68 des Systems 6 sein. Der Schlüsselserver erzeugt ferner die Zugangsberechtigungen B und die zugehörige Prüfinformation V. Die Zugangsberechtigungen können beispielsweise unterschiedlich für unterschiedliche Paketkästen 69 sein, beispielsweise weil sie unterschiedliche Lock-IDs enthalten. Dann sind entsprechend auch die zugehörigen Prüfinformationen V unterschiedlich. Allerdings können grundsätzlich für eine oder mehrere Paketkästen auch gleiche Zugangsberechtigungen B verwendet werden (beispielsweise wenn keine LockID enthalten ist). Der Schlüsselserver erzeugt auch die Authentisierungsinformation A durch Verschlüsselung des vierten Schlüssels H₄ mit dem ersten Schlüssel S₁. Auch diese Authentisierungsinformationen A können je nachdem, ob das Schlüsselpaar S₁, S₂ jeweils individuell für die Paketkästen 69 gewählt ist und ob das Schlüsselpaar H₃, H₄ jeweils individuell für die Handscanner gewählt ist, individuell für die Paketkästen 69 und/oder die Handscanner 68 sein. Der Schlüsselserver 60 übermittelt beispielsweise jeweils die Zugangsberechtigungen B, die Prüfinformation V, die Authentisierungsinformation A und den dritten Schlüssel H₃ für eine Vielzahl von Handscannern 68 an den Bereitstellungsserver 66. Dies kann beispielsweise in regelmäßigen Abständen, z.B. jeden Tag von neuem mit neuen Schlüsseln und/oder neuen Berechtigungen erfolgen. Der Bereitstellungsserver 66 gruppiert dann beispielsweise die für einen Handscanner 68 eines Zustellbezirks erforderlichen, vom Schlüsselserver 60 erhaltenen jeweiligen Informationen (B, V, A, H₃) und stellt diese dem Handscanner 68 direkt oder indirekt - beispielsweise über einen zwischengeschalteten Computer - zur Verfügung. Ein Zusteller 70 eines Zustellbezirks erhält dadurch alle für die jeweilige Öffnung der Paketkästen 69 auf seiner Tour jeweils erforderlichen Informationen auf seinen Handscanner 68. Die Zuordnung der auf die Handscanner 68 zu übertragenden jeweiligen Informationen findet unter Berücksichtigung der Bezirksschneidung, also der Zuordnung von Zustellbezirken zu Zustellern 70, statt, die vom Zuordnungsserver 67 vorgenommen wird. Parallel erhalten auch die Paketempfänger 63 ihre Schlüssel und Zugangsberechtigungsinformationen, also z.B. B, V, A und H₃, mit denen sie die Paketkästen 69 öffnen können. Für die Nutzer 63 sind zusätzlich oder alternativ zu den Mobiltelefonen 61 Tags 62 vorgesehen, die in der Regel allerdings nur den jeweils einem Nutzer 62 zugeordneten Paketkasten 69 öffnen. Die auf den Tags enthaltenen Zugangsberechtigungsinformationen und Schlüssel werden ebenfalls vom Schlüsselserver 60 erzeugt und dann auf den Tags gespeichert, wie durch die gestrichelten Linien in Fig. 4 angedeutet ist. Diese Tags spielen für die Synchronisation keine wesentliche Rolle und werden daher vorliegend nicht näher beschrieben.

Wenn der Nutzer 63 ein Mobiltelefon zum Öffnen des Paketkastens 69 verwendet, kann dieses Mobiltelefon beispielsweise über eine Softwareanwendung (nachfolgend als "App" bezeichnet), mit dem Schlüsselserver 60 kommunizieren.

Im Folgenden werden einige Aspekte des Zugangskontrollsystems 6 der Fig. 4 detaillierter beschrieben.

Zugangsberechtigungen B werden vom Schlüsselserver 60 erteilt. Eine Zugangsberechtigung kann beispielsweise ein oder mehrere der folgenden Zugangsberechtigungsparameter enthalten:
- LockID: ID des Schlosses
- NotBeforeDate: Datum "gültig von" mit Jahr/Monat/Tag
- NotAfterDate: Datum "gültig bis" mit Jahr/Monat/Tag
- StartTimeOfDate: Uhrzeit ab wann die Zugangsberechtigung gültig ist (Standard z.B. 00:00:00)
- EndTimeOfDay: Uhrzeit bis wann die Zugangsberechtigung gültig ist (Standard z.B. 23:59:59)
- MaxUses: Anzahl der Verwendungen; Standart 0 bedeutet "unbegrenzt"
- Permissions: Einstellungserlaubnis für sicherheitskritische Operationen

Dabei definieren die zwei Parameter NoteBeforeDate und NotAfterDate den Gültigkeitszeitraum der Zugangsberechtigung, z.B. mit der Genauigkeit eines Tages. "NotBeforeDate" legt den Tag der Erstverwendung fest und "NotAfterDate" den letzten Tag im Gültigkeitszeitraum. "StartTimeOfDay" spezifiziert weiter die Uhrzeit, ab wann der Gültigkeitszeitraum beginnt, und "EndTimeOfDay" spezifiziert, wann dieser endet. Die Genauigkeit ist beispielsweise eine Sekunde. "MaxUses" definiert, wie oft der Schlüssel verwendet werden kann, um ein Schloss zu öffnen. Der Wert "0" legt dabei beispielsweise fest, dass der Schlüssel unbegrenzt im Zeitraum verwendet werden darf. "Permissions" kodiert, beispielsweise durch das Setzen von einzelnen Bits in einem Byte, welche sicherheitskritischen Operationen ein Token ausführen darf (ein auf 1 gesetztes Bit zeigt dann jeweils das Vorliegen der Berechtigung an), z.B. ob jeweils ein Öffnen des Paketfachs, ob ein Öffnen des Paketfachs und Brieffachs, und/oder ob die Vornahme einer Zeitsynchronisation erlaubt wird (also ob eine Synchronisation der Uhr des Schlosses vorgenommen werden darf, wie zu Schritt 302 des Flussdiagramms 300 der Fig. 3A/B bereits erläutert wurde).

Ein Schloss wird beispielsweise geöffnet, nachdem sich ein Token (z.B. Handscanner 68) durch die Übermittlung (z.B. per Bluetooth) einer gültigen Zugangsberechtigung authentisiert hat. Wie bereits erwähnt kann mit der Zugangsberechtigung auch zeitliche Information T zur Synchronisation einer Uhr des Schlosses und diesbezügliche Prüfinformation V_{T} an das Schloss kommuniziert werden, allerdings kann dies auch in getrennten Kommunikationen derselben Kommunikationssitzung oder auch in getrennten Kommunikationssitzungen stattfinden.

Aus Sicht des Schlosses (als Beispiel einer ersten Vorrichtung) stellt sich der Vorgang der Prüfung, ob eine Öffnung erfolgen darf, im Wesentlichen so dar, wie er bereits in den Schritten 302-304 des Flussdiagramms 300 der Fig. 3A/3B hinsichtlich der Prüfung der Berechtigung zur Synchronisation dargestellt wurde, allerdings mit der Abweichung, dass in Schritt 302b nicht - oder nicht nur - geprüft wird, ob ein Synchronisieren zulässig ist (anhand eines entsprechend gesetzten Bits in den "Permissions"), sondern das geprüft wird, ob die in der Zugangsberechtigung B enthaltenen Zugangsberechtigungsparameter hinsichtlich im Schloss gespeicherter jeweiliger Bezugsinformationen zum Öffnen berechtigen. Im einfachsten Fall wird beispielsweise nur geprüft, ob ein zur Öffnung von ein oder mehreren Türen des Paketkastens 69 berechtigendes Bit in den "Permissions" gesetzt ist. Optional können zusätzlich Zugangsberechtigungsparameter wie LockID und/oder MaxUses gegen eine im Schloss gespeicherte LockID bzw. einen Zähler für die bisher erfolgten Öffnungen geprüft werden und es kann dann beispielsweise nur bei jeweiliger Übereinstimmung festgestellt werden, dass eine Berechtigung zum Öffnen des Paketkastens 69 vorliegt. Insbesondere können auch die zeitlichen Zugangsberechtigungsparameter NotBeforeDate und NotAfterDate (und optional auch die weiteren Parameter StartTimeOfDate und EndTimeOfDay) mit der Uhr des Schlosses verglichen werden, um festzustellen, ob die Zugangsberechtigungsinformation aus zeitlicher Sicht überhaupt noch gültig ist, also beispielsweise die von der Uhr des Schlosses angezeigte Zeit und das Datum einen Zeitpunkt definieren, der von dem durch die zeitlichen Zugangsberechtigungsparameter definierten Zeitintervall liegt.

Bei dieser Prüfung, ob eine Öffnung erfolgen darf, ist dann beispielsweise nur der Schritt 302 (mit abgewandeltem Teilschritt 302b wie beschrieben) zwingend, während die Schritte 303 und 304 jeweils wiederum optional sein können. Auch die Reihenfolge der Schritte 302-304 und der darin jeweils enthaltenen Teilschritte ist beliebig.

Wenn ein oder mehrere der Schritte 303 und 304 zusätzlich zu dem Schritt 302 (mit abgewandeltem Teilschritt 302b wie beschrieben) durchgeführt werden, wird beispielsweise nur dann, wenn alle dieser Schritte ein positives Ergebnis ergeben, festgestellt, dass eine Berechtigung zum Öffnen des Paketkastens 69 vorliegt.

Vorteilhaft wird beispielsweise in der gleichen Zugangsberechtigungsinformation B, anhand des Setzens entsprechender Bits in den "Permissions", sowohl die Berechtigung zum Synchronisieren als auch zum Öffnen des Paketkastens 69 erteilt, das Vorliegen dieser Berechtigungen in Schritt 302b jeweils geprüft und die Zugangsberechtigungsinformation B zusammen mit der zeitlichen Information T kommuniziert. Wenn dann nämlich zusätzlich die Informationen V, A und die Response auf die Challenge erhalten werden, müssen die Prüfungen der Schritte 303 und 304 vorteilhaft nur einmal durchgeführt werden, um die Integrität und Authentizität von B hinsichtlich der dritten Vorrichtung (z.B. dem Schlüsselserver 60) und der zweiten Vorrichtung (z.B. dem Handscanner 68) festzustellen.

Es wird dann also im gleichen Vorgang effizient eine Synchronisation des Schlosses und dessen Öffnung bewirkt, was insbesondere auch dann vorteilhaft ist, wenn das Schloss batteriebetrieben ist und nur im Rahmen der Kommunikation mit Zugangsberechtigungsnachweisvorrichtungen (z.B. Handscanner 68, Mobiltelefon 61 oder Tag 62) aus einem energiesparenden Schlafmodus in einen Aktivmoduls überführt wird. Diese Überführung (und das Verharren des Schlosses in dem Aktivmodus für eine gewisse Zeit) ist dann nur einmal statt zweimal erforderlich, was den Energiebedarf senkt und die Lebensdauer der Batterie erhöht.

Wie bereits geschildert ist in der Schlosselektronik des Paketkastens 69 eine Uhr (insbesondere eine Echtzeituhr) implementiert. Diese Uhr ist beispielsweise im Prozessor des Schlosses integriert (vgl. die Uhr 501 im Prozessor 50 der Fig. 2) und arbeitet unabhängig vom Betriebszustand des Prozessors (so lange eine Batterieversorgung vorhanden ist). Diese Uhr beinhaltet die aktuelle Uhrzeit und das Datum, und wird beispielsweise für das Prüfen der zeitlichen Gültigkeit von Zugangsberechtigungen, als Zeitstempel von Logeinträgen und/oder für die Türüberwachung verwendet. Die Uhr besitzt beispielsweise einen eigenen Taktgeber, der auf geringen oder geringsten Stromverbrauch ausgelegt ist. Die Uhr besitzt beispielsweise eine maximale Abweichung von ≤ 6min/Monat. Nach dem Einlegen der Batterien in das Schloss startet die Uhr z.B. mit einem vordefinierten Startzeitpunkt, beispielsweise 00:00:00 Uhr Datum 01.01.2014, oder mit der Zeit der letzten Synchronisation, falls eine solche bereits stattgefunden hat (anderenfalls kann z.B. wieder ein vordefinierter Startzeitpunkt herangezogen werden), oder mit einer anderen gespeicherten Zeit, beispielsweise einer regelmäßig oder in Abhäbngigkeit von vordefinierten Ereignissen gespeicherten Zeit. Wird die Uhr nicht synchronisiert, läuft die Zeit ab diesem Startzeitpunkt.

Von Zeit zu Zeit muss eine zeitliche Synchronisation der Uhr des Schlosses erfolgen, damit Ungenauigkeiten der im Schloss eingebauten Uhr nicht zu groß werden. Falls dies nicht erfolgt, könnte es passieren, dass gültige Zugangsberechtigungen fälschlicherweise vom Schloss abgelehnt werden.

Die Schlösser werden in aller Regel im Offline-Modus betrieben, so dass es nicht möglich ist, die Zeit serverseitig zu überwachen oder neu zu setzen. Allerdings kann für die Zeitsynchronisation z.B. Handscanner 68 (und/oder Mobiltelefon 61) eingesetzt werden. Dabei muss das Gerät 68/61 vom Schloss als vertrauenswürdige Quelle für die korrekte Zeit angesehen werden, also vorzugsweise authentifiziert werden.

Die aktuelle Zeit wird dem Schloss beispielsweise über eine Bluetooth-Verbindung übermittelt. Ein Handscanner 68 (oder Mobiltelefon 61) benötigt zur Vornahme der Zeitsynchronisation eine Zugangsberechtigung B, bei der das korrekte Berechtigungsbit in den "Permissions" gesetzt ist (wie oben bereits beschrieben wurde). Die gleiche Zugangsberechtigung kann auch zum Öffnen von ein oder mehreren Türen des Paketkastens verwendet werden. Anders ausgedrückt kann die Synchronisationsinformation quasi "huckepack" mit zur Verschaffung von Zugang genutzten Zugangsberechtigungen kommuniziert werden.

Der Handscanner 68 (oder das Mobiltelefon 61) überträgt (beispielsweise via Bluetooth) seine laufende Zeit und Datum als zeitliche Information T und ein Validierungsmerkmal V_{T} dafür, das beispielsweise durch kryptographische Operationen über zumindest T unter Verwendung des dritten Schlüssels H₃ des Handscanners 68 oder Mobiltelefons 61 (z.B. eine digitale Signatur oder ein MAC) erzeugt wird. T und V_{T} werden dann beispielsweise zusammen (oder getrennt davon) mit B und V an das Schloss übertragen, z.B. in der gleichen Kommunikationssitzung. Aufgrund der Inhalte von B wird dann im Schloss entschieden, ob eine Berechtigung zur Zeitsynchronisation vorliegt, und die dazu erforderlichen Werte werden nach Prüfung von V_{T} (anhand H₄) aus T entnommen. Diese Vorgehensweise wurde bereits am Beispiel der Fig. 3A/B erläutert.

Nachdem das Schloss die entsprechende Zugangsberechtigung B auf die Synchronisationsberechtigung hin geprüft hat und die oben angegebenen Daten T und V_{T} empfangen hat, werden beispielsweise folgende Schritte ausgeführt
1. Falls die übertragene Zeit T in einem definierten Zeitfenster liegt (z.B. maximal 10 - 30 Minuten vor oder nach der aktuellen Schlosszeit), übernimmt das Schloss die übertragene Zeit.
2. Falls das Schloss feststellt, dass es sich in einem Zustand bei erstmaliger Inbetriebnahme, oder nach einem Reset, oder nach einem Batteriewechsel oder sonstigen Stromausfall befindet und/oder dass eine Zeitsynchronisation erstmalig stattfindet, wird die Zeit T übernommen, falls diese größer (später) als die aktuelle Schlosszeit (ggf. minus eines Schwellwerts) ist. Wie oben erwähnt handelt es sich bei der aktuellen Schlosszeit beispielsweise um eine ausgehend von einer festgelegten Standardzeit, der Zeit der letzten Synchronisation oder einer anderen gespeicherten Zeit weiter gezählte Zeit. Ein Reset findet beispielsweise statt, wenn eine insbesondere gezielte Stromunterbrechung zum Prozessor stattfindet (beispielsweise durch Betätigung eines Resetknopfes des Schlosses oder durch einen empfangenen Befehl vom Token). Das Schloss kann beispielsweise daran feststellen, dass es sich in einem Zustand nach einem Reset, Batteriewechsel oder sonstigen Stromausfall oder bei erstmaliger Inbetriebnahme befindet, dass ein Flag auf 0 gesetzt ist (das beispielsweise erst nach einer Zeitsynchronisation auf 1 gesetzt wird und bei jedem der Ereignisse Reset, Batteriewechsel oder sonstigem Stromausfall automatisch wieder auf 0 zurückfällt, beispielsweise weil es in einem Strom erfordernden Speicher gespeichert ist) oder dass ein Zähler für erfolgte Zeitsynchronisationen, der bei einem Reset/Batteriewechsel/sonstigen Stromausfall und bei Auslieferung auf 0 gesetzt wird/ist, immer noch auf 0 ist.
3. Nachdem eine Zeitsynchronisation, nach 1. oder 2. erfolgt ist, wird ein "UNLOCK"-Protokoll abgehandelt, also die Zugangsberechtigung B validiert (falls nicht schon geschehen) und geprüft und ggf. das Schloss geöffnet.

Diese Lösung ermöglicht es, die Zeitsynchronisation mit einem Handscanner 68 oder einem Mobiltelefon 61 auszuführen, falls die Synchronisationszeit innerhalb eines definierbaren Bereichs relativ zu Schlosszeit liegt oder sich das Schloss in einem vordefinierten Zustand befindet. Die Uhr des Handscanners 68 bzw. des Mobiltelefons 61 kann beispielsweise jeweils als Funkuhr ausgebildet und daher mit einem Zeitzeichensender synchronisiert sein, mit dem sich auch der Schlüsselserver 60 synchronisiert. Alternativ kann die Synchronisation des Schlüsselservers anhand eines Netzwerk-Synchronisationsdienstes geschehen, und die diesbezügliche Zeit kann dann auch als Grundlage für die Synchronisation von Handscanner 68 und Mobiltelefon 61 herangezogen werden, beispielsweise indem eine Dockingstation des Handscanners 68 mit einem Computer verbunden ist, der den Handscanner 68 bei jeder Aufladung/Betankung mit der Zeit des Netzwerk-Synchronisationsdienstes synchronisiert (dies ist beispielsweise der bereits erwähnte Computer, der vom Bereitstellungsserver 66 die Zugangsberechtigungen und Schlüssel für die Paketkästen des Zustellbezirks des Handscanners 68 erhält und diese dann über die Dockingstation oder alternativ über WLAN an den Handscanner 68 überträgt). Ein Mobiltelefon 61 kann beispielsweise über einen Mobilfunkprovider auf Grundlage der Zeit des Netzwerk-Synchronisationsdienstes synchronisiert werden, oder über eine Datenverbindung zu einem Server, der den Netzwerk-Synchronisationsdienstes nutzt, beispielsweise über eine App des Mobiltelefons 61, mit der auch die Verbindung zum Schlüsselserver hergestellt wird.

Hinsichtlich des Systems 6 der Fig. 4 ist anzumerken, dass die dort verwendete Art der Zugangsberechtigungsinformation und Prüfinformation (also insbesondere die Informationen B, V, A, H₃) lediglich beispielhaft ist und die zwischen Handscanner 68 (oder Mobiltelefon 61) und Schloss/Paketkasten 69 ausgeführte Synchronisation auch bei Verwendung andersartiger Zugangsberechtigungsinformation, die von zeitlicher Information abhängig ist, in gleicher Weise eingesetzt werden kann. Beispielsweise kann der Schlüsselserver 60 für jedes Schloss eine geheime individuelle Kennung oder geheimen individuellen Code (z.B. ein symmetrischer Schlüssel, beispielsweise ein AES-Schlüssel) umfassen, die/der entsprechend auch jeweils im Schloss hinterlegt ist. Die zeitlich begrenzte Zugangsinformation für ein bestimmtes Schloss kann dann beispielsweise durch Verknüpfung von zeitlicher Information, beispielsweise erhalten von einer Uhr, mit dem schlossspezifischen Code nach einer festgelegten (beispielsweise kryptographischen) Vorschrift erzeugt werden, um eine Zugangsberechtigungsinformation zu erhalten. Beispielsweise wird von der Uhr die jeweils die aktuelle Uhrzeit (z.B. in Minuten oder Stunden, gfs. mit Datum) herangezogen und mit dem schlossspezifischen Code verschlüsselt (beispielsweise symmetrisch). Im Schloss wird die erhaltene Zugangsberechtigungsinformation mit dem Code des Schlosses entschlüsselt und mit der Uhrzeit des Schlosses (entsprechend in Minuten oder Stunden, gfs. mit Datum) verglichen. Wenn die aus der entschlüsselten Zugangsberechtigungsinformation erhaltene Uhrzeit innerhalb eines nach einer vordefinierten Regel bestimmten Intervalls (beispielsweise 10 Minuten, od. 1 Stunde, oder 1 Tag um die aktuelle Zeit des Schlosses oder in der gleichen Stunde oder am gleichen Tag) liegt, wird von einer Zugangsberechtigung ausgegangen. Auch hier ist eine zeitlicher Gleichlauf der Uhren im Schlüsselserver und dem Schloss unerlässlich.

Fig. 5 zeigt ein beispielhaftes Flussdiagramm 1100, das die mögliche Reihenfolge von Operationen in einem erfindungsgemäßen Schloss darstellt. Welche Operationen generell vom Schloss ausgeführt werden sollen, kann dem Schloss vom Token beispielsweise durch ein oder mehrere Kommandos mitgeteilt werden. Je nach gewünschter Operation werden dann ein oder mehrere der oben beschriebenen und in Fig. 1 dargestellten Werte B, V, A, T, V_{T} vom Token (z.B. dem Handscanner 68) an das Schloss übertragen.

Nach dem Start 1101 können eine Tokenauthentisierung (anhand des Schlüssels H₄, vergleiche Schritt 304 der Fig. 3A/B) vorgenommen (Schritt 1104) oder ein Firmware-Update der Schlosssoftware (Schritt 1110) vorgenommen werden. Die Fig. 5 ist so zu verstehen, dass jede Operation grundsätzlich optional ist, also beispielsweise nur der Schritt 1104 und der Schritt 1105 ausgeführt werden können, wenn dies so gewünscht ist. Ferner kann daher die Bearbeitung auch nach jeder Operation beendet werden, beispielsweise nach Schritt 1108.

Nach erfolgreicher Tokenauthentisierung 1104 kann entweder die Elektronik zurückgesetzt werden (Reset im Schritt 1109), der Status des Schlosses abgefragt werden (Schritt 1108) oder eine Prüfung einer erhaltenen Zugangsberechtigung B vorgenommen werden (Schritt 1105). Nach beiden Schritten kann optional auch ein Reset vorgenommen werden (Schritt 1109). Wenn die Zugangsberechtigung B beispielsweise zum Öffnen einer oder mehrerer Türen des Paketkastens 69 berechtigt, wird/werden diese Tür(en) geöffnet (Schritt 1106). Wenn die Zugangsberechtigung B anzeigt, dass - beispielsweise zusätzlich - eine Berechtigung zur Zeitsynchronisation vorliegt, wird entsprechend eine Synchronisation der Uhr des Schlosses vorgenommen (Schritt 1107). Danach kann optional - bei vorliegender Berechtigung - die Tür geöffnet werden (Schritt 1106) oder ein Reset vorgenommen werden (Schritt 1109). Auch nach Abfrage des Status (Schritt 1108) kann optional - bei vorliegender Berechtigung - die Tür geöffnet werden (Schritt 1106).

Wie aus Fig. 5 ersichtlich ist, findet nach dem Reset (Schritt 1109) oder dem Firmware-Update (Schritt 1110) keine Öffnung der Tür statt.

Als Ausführungsbeispiele der vorliegenden Erfindung sollen weiterhin offenbart werden:
Ausführungsbeispiele 1-27: Die in den Ansprüchen 1-27 definierten Ausführungsformen.

Ausführungsbeispiel 28:
Verfahren, durchgeführt durch eine zweite Vorrichtung (2), das Verfahren umfassend:
   - Kommunizieren von zeitlicher Information (T), die unter Verwendung einer Uhr der zweiten Vorrichtung gewonnen wird, an eine erste Vorrichtung (1), um der ersten Vorrichtung zu ermöglichen, eine oder mehrere der folgenden Prüfungen vorzunehmen:
      - eine Prüfung (308), ob sich die erste Vorrichtung (1) in einem Zustand nach erstmaliger Inbetriebnahme, nach einem Batteriewechsel oder sonstigen Stromausfall oder nach einem Reset befindet,
      - eine Prüfung (307), ob eine Abweichung zwischen einer zeitlichen Information (Tₗₒₖₐₗ) einer Uhr (501) der ersten Vorrichtung (1) und der kommunizierten zeitlichen Information (T) kleiner oder kleiner-oder-gleich ist als ein vordefinierter oder nach einer vordefinierten Regel bestimmter Schwellwert (D),
      - eine Prüfung, ob die kommunizierte zeitliche Information (T) das gleiche Datum aufweist wie die zeitliche Information (Tₗₒₖₐₗ) der Uhr (501) der ersten Vorrichtung (1),
wobei die erste Vorrichtung (1) ihre Uhr (501) unter Verwendung der kommunizierten zeitlichen Information (T) synchronisiert, falls alle von einer oder mehreren vordefinierten Bedingungen erfüllt sind, wobei eine der einen oder mehreren Bedingungen erfordert, dass zumindest eine der einen oder mehreren durchgeführten Prüfung(en) ein positives Ergebnis ergeben hat.

Ausführungsbeispiel 29
Verfahren nach Ausführungsbeispiel 28, wobei eine weitere der einen oder mehreren Bedingung(en) erfordert, dass sich die zweite Vorrichtung (2) erfolgreich gegenüber der ersten Vorrichtung (1) authentisiert hat.

Ausführungsbeispiel 30:
Verfahren nach Ausführungsbeispiel 29, wobei die Authentisierung der zweiten Vorrichtung gegenüber der ersten Vorrichtung auf einem dritten Schlüssel (H₃) beruht, der mit einem vierten Schlüssel (H₄), der zumindest im Zeitpunkt einer Prüfung der Authentizität der zweiten Vorrichtung (2) in der ersten Vorrichtung (1) vorhanden ist, ein symmetrisches oder asymmetrisches Schlüsselpaar (H₃, H₄) bildet.

Ausführungsbeispiel 31:
Verfahren nach Ausführungsbeispiel 30, wobei eine Vielzahl von zweiten Vorrichtungen (2) zeitliche Informationen (T) an die erste Vorrichtung (1) kommunizieren können, und wobei sich zumindest eine Gruppe von mindestens zwei zweiten Vorrichtungen der Vielzahl von zweiten Vorrichtungen, die die zweite Vorrichtung (2) umfasst, mit dem gleichen dritten Schlüssel (H₃) gegenüber der ersten Vorrichtung (1) authentisieren.

Ausführungsbeispiel 32:
Verfahren nach einem der Ausführungsbeispiele 30-31, wobei die Authentisierung der zweiten Vorrichtung (2) eine Durchführung von kryptographischen Operationen (KRYPT) über die zeitlichen Informationen (T) unter Verwendung des dritten Schlüssels (H₃) zum Erhalten von Prüfinformation (V_{T}) und ein Kommunizieren der Prüfinformation (V_{T}) an die erste Vorrichtung (1) umfasst, die anhand der erhaltenen Prüfinformation (V_{T}), der erhaltenen zeitlichen Information (T) und des vierten Schlüssels (H₄) die Authentizität der zweiten Vorrichtung (2) prüfen kann.

Ausführungsbeispiel 33:
Verfahren nach einem der Ausführungsbeispiele 30-32, ferner umfassend:
   - Kommunizieren von Information (A), die zumindest den vierten Schlüssel, verschlüsselt unter Verwendung zumindest eines ersten Schlüssels, umfasst, an die ersten Vorrichtung (1), so dass die erste Vorrichtung (1) den verschlüsselten vierten Schlüssel unter Verwendung zumindest eines zweiten Schlüssels (S₂) entschlüsseln kann, um den vierten Schlüssel (H₄) zu erhalten.

Ausführungsbeispiel 34:
Verfahren nach Ausführungsbeispiel 33, wobei der erste Schlüssel (S₁) der zweiten Vorrichtung (2) nicht bekannt ist.

Ausführungsbeispiel 35:
Verfahren nach einem der Ausführungsbeispiele 33-34, wobei dererste Schlüssel (S₁) an einer dritten Vorrichtung (3) gespeichert ist, wobei die dritte Vorrichtung (3) die Information (A), die zumindest den unter Verwendung des ersten Schlüssels (S₁) verschlüsselten vierten Schlüssel (H₄) umfasst, erzeugt und diese Information (A) und den dritten Schlüssel (H₃) an die zweite Vorrichtung (2) kommuniziert.

Ausführungsbeispiel 36:
Verfahren nach Ausführungsbeispiel 35, ferner umfassend:
   - Kommunizieren von Zugangsberechtigungsinformation (B), die zumindest einen Zugangsberechtigungsparameter umfasst, der einen Zeitraum definiert, innerhalb dessen die Zugangsberechtigungsinformation (B) zum Zugang an der ersten Vorrichtung (1) oder an einer von dieser kontrollierten Vorrichtung (69) berechtigt, und von Prüfinformation (V), die durch Durchführung kryptographischer Operationen (KRYPT) über die Zugangsberechtigungsinformation (B) unter Verwendung des ersten Schlüssels (S₁) von der dritten Vorrichtung (3) erzeugt wird, an die erste Vorrichtung (1), um der ersten Vorrichtung (1) zu ermöglichen zu entscheiden, ob Zugang gewährt werden darf, wobei notwendige Bedingungen zur Gewährung des Zugangs sind, dass anhand einer Auswertung der kommunizierten Prüfinformation (V) in der ersten Vorrichtung (1) unter Verwendung des zweiten Schlüssels (S') und der kommunizierten Zugangsberechtigungsinformation (B) festgestellt wird, dass die kommunizierte Prüfinformation (V) durch Durchführung kryptographischer Operationen (KRYPT) über die der kommunizierten Zugangsberechtigungsinformation (B) entsprechender Information unter Verwendung des ersten Schlüssels (S₁) erzeugt wurde, und dass eine Prüfung ergibt, dass die zeitliche Information (Tₗₒₖₐₗ) der Uhr (501) in dem von dem zumindest einen Zugangsberechtigungsparameter definierten Zeitraum liegt.

Ausführungsbeispiel 37:
Verfahren nach einem der Ausführungsbeispiele 28-35, ferner umfassend:
   - Kommunizieren von Zugangsberechtigungsinformation (B), die zumindest einen Zugangsberechtigungsparameter umfasst, der einen Zeitraum definiert, innerhalb dessen die Zugangsberechtigungsinformation zum Zugang an der ersten Vorrichtung (1) oder an einer von dieser kontrollierten Vorrichtung (69) berechtigt, an die erste Vorrichtung (1), um der ersten Vorrichtung (1) zu ermöglichen zu entscheiden, ob Zugang gewährt werden darf, wobei notwendige Bedingung zur Gewährung des Zugangs ist, dass eine Prüfung ergibt, dass die zeitliche Information (Tₗₒₖₐₗ) der Uhr (501) in dem von dem zumindest einen Zugangsberechtigungsparameter definierten Zeitraum liegt.

Ausführungsbeispiel 38:
Verfahren nach einem der Ausführungsbeispiele 36-37, wobei die kommunizierte Zugangsberechtigungsinformation (B) ferner einen Zugangsberechtigungsparameter umfasst, der angibt, ob eine Synchronisation der Uhr (501) der ersten Vorrichtung (1) vorgenommen werden darf oder nicht, und wobei eine weitere der einen oder mehreren Bedingung(en) erfordert, dass der Zugangsberechtigungsparameter angibt, dass eine Synchronisation der Uhr (501) der ersten Vorrichtung (1) vorgenommen werden darf.

Ausführungsbeispiel 39:
Verfahren nach einem der Ausführungsbeispiele 36-38, wobei das Synchronisieren der Uhr (501) vor der Prüfung, ob die zeitliche Information (Tₗₒₖₐₗ) der Uhr (501) in dem von dem zumindest einen Zugangsberechtigungsparameter definierten Zeitraum liegt, stattfindet.

Ausführungsbeispiel 40:
Verfahren nach einem der Ausführungsbeispiele 36-39, wobei die zeitliche Information (T) und die Zugangsberechtigungsinformation (B) innerhalb der gleichen Kommunikationssitzung an die erste Vorrichtung (1) kommuniziert werden.

Ausführungsbeispiel 41:
Verfahren nach einem der Ausführungsbeispiele 36-40, wobei der Zeitraum einem Tag entspricht.

Ausführungsbeispiel 42:
Verfahren nach einem der Ausführungsbeispiele 28-41, ferner umfassend:
   - Kommunizieren von Zugangsberechtigungsinformation (B), die zumindest einen Zugangsberechtigungsparameter umfasst, der angibt, ob eine Synchronisation der Uhr (501) der ersten Vorrichtung (1) vorgenommen werden darf oder nicht, an die erste Vorrichtung (1), wobei eine weitere der einen oder mehreren Bedingung(en) erfordert, dass der Zugangsberechtigungsparameter angibt, dass eine Synchronisation der Uhr (501) der ersten Vorrichtung (1) vorgenommen werden darf.

Ausführungsbeispiel 43:
Verfahren nach einem der Ausführungsbeispiele 28-42, ferner umfassend:
   - Kommunizieren Zugangsberechtigungsinformation, die zumindest einen Zugangsberechtigungsparameter umfasst, der einen Zeitraum definiert, an die erste Vorrichtung, wobei eine weitere der einen oder mehreren Bedingung(en) erfordert, dass die kommunizierte zeitliche Information innerhalb des Zeitraums liegt.

Ausführungsbeispiel 44:
Verfahren nach einem der Ausführungsbeispiele 28-43, wobei eine weitere der einen oder mehreren Bedingung(en) erfordert, dass ein Datum der kommunizierten zeitlichen Information später ist als ein Datum des Zeitpunkts der letzten Synchronisation oder Einstellung der Uhr.

Ausführungsbeispiel 45:
Verfahren nach einem der Ausführungsbeispiele 28-44, wobei in dem Fall, dass die Prüfung ergibt, dass die Abweichung zwischen der zeitlichen Information der Uhr und der kommunizierten zeitlichen Information nicht entweder kleiner oder kleiner-oder-gleich ist als der Schwellwert, folgendes durchgeführt wird:
   - Einstellen der Uhr auf einen Zeitpunkt, der sich aus der zeitlichen Information der Uhr abzüglich des Schwellwerts ergibt, falls die kommunizierte Information kleiner ist als die zeitliche Information der Uhr abzüglich des Schwellwerts; und
   - Einstellen der Uhr auf einen Zeitpunkt, der sich aus der zeitlichen Information der Uhr zuzüglich des Schwellwerts ergibt, falls die kommunizierte Information nicht kleiner ist als die zeitliche Information der Uhr abzüglich des Schwellwerts.

Ausführungsbeispiel 46:
Verfahren nach einem der Ausführungsbeispiele 28-45, wobei die Uhr (501) der ersten Vorrichtung (1) bei erstmaliger Inbetriebnahme, nach einen Batteriewechsel oder sonstigen Stromausfall oder nach einem Reset automatisch auf einen vordefinierten Zeitpunkt, den Zeitpunkt der letzten Synchronisation oder einen anderen in der ersten Vorrichtung (1) gespeicherten Zeitpunkt eingestellt wird und ab diesem zu laufen beginnt.

Ausführungsbeispiel 47:
Verfahren nach einem der Ausführungsbeispiele 28-46, wobei bei der Prüfung, ob sich die erste Vorrichtung (1) in einem Zustand nach erstmaliger Inbetriebnahme, nach einem Batteriewechsel oder sonstigem Stromausfall oder nach einem Reset befindet, ferner geprüft wird (309), obdie kommunizierte zeitliche Information (T) später ist als eine zeitliche Information (Tₗₒₖₐₗ) einer Uhr (501) der ersten Vorrichtung (1) oder als die zeitliche Information (T) der Uhr der ersten Vorrichtung (1) abzüglich eines vordefinierten oder nach einer vordefinierten Regel bestimmten Schwellwerts (D), und wobei ein positives Ergebnis dieser Prüfung lediglich vorliegt, wenn festgestellt wird, dass sich die Vorrichtung (1) in einem Zustand nach erstmaliger Inbetriebnahme, nach einem Batteriewechsel oder sonstigen Stromausfall oder nach einem Reset befindet und die kommunizierte zeitliche Information (T) später ist als die zeitliche Information (Tₗₒₖₐₗ) der Uhr (501) der ersten Vorrichtung (1) oder als die zeitliche Information (T) der Uhr (501) der ersten Vorrichtung (1) abzüglich des Schwellwerts.

Ausführungsbeispiel 48:
Verfahren nach einem der Ausführungsbeispiele 28-47, wobei die vordefinierte Regel zumindest die durchschnittliche Sollzeitabweichung der Uhr (501) bezogen auf ein Zeitintervall und die seit der letzten erfolgten Synchronisierung der Uhr (501) vergangene Zeit berücksichtigt.

Ausführungsbeispiel 49:
Verfahren nach einem der Ausführungsbeispiele 28-48, wobei die zeitliche Information (T) aus einer Uhr der zweiten Vorrichtung (2) gewonnen und drahtlos an die erste Vorrichtung (1) kommuniziert wird.

Ausführungsbeispiel 50:
Verfahren nach einem der Ausführungsbeispiele 28-49, wobei die erste Vorrichtung (1) den Zugang zu einem Behälter, insbesondere einem Paketkasten (69), kontrolliert.

Ausführungsbeispiel 51:
Verfahren nach einem der Ausführungsbeispiele 28-50, wobei die zweite Vorrichtung (2) ein elektronisches tragbares Gerät eines Zustellers von Sendungen, insbesondere ein Handscanner (68), ist.

Ausführungsbeispiel 52:
Verfahren nach einem der Ausführungsbeispiele 28-51, wobei die Kommunikation der zeitlichen Information (T) an die erste Vorrichtung (1) mittels drahtloser Kommunikation erfolgt, insbesondere über Bluetooth oder NFC.

Ausführungsbeispiel 53:
Zweite Vorrichtung (2), eingerichtet zur Ausführung und/oder Steuerung des Verfahrens nach einem der Ausführungsbeispiele 28-52 oder umfassend jeweilige Mittel zur Ausführung und/oder Steuerung der Schritte des Verfahrens einem der Ausführungsbeispiele 28-52.

Ausführungsbeispiel 54:
Computerprogramm, umfassend Programmanweisungen, die einen Prozessor (50) zur Ausführung und/oder Steuerung des Verfahrens gemäß einem der Ausführungsbeispiele 1 bis 25 oder 28-52 veranlassen, wenn das Computerprogramm auf dem Prozessor (50) läuft.

Ausführungsbeispiel 55:
System (4), umfassend:
   - eine erste Vorrichtung (1) nach Ausführungsbeispiel 26,
   - eine zweite Vorrichtung (2) nach Ausführungsbeispiel 53.

Die in dieser Spezifikation beschriebenen beispielhaften Ausführungsformen / Ausführungsbeispiele der vorliegenden Erfindung sollen zunächst jeweils für sich, aber auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, durchgeführt durch eine erste Vorrichtung (1), das Verfahren umfassend:
- Erhalten (301) von an die erste Vorrichtung (1) kommunizierter zeitlicher Information (T), und
- Durchführen, nach dem Erhalten der an die erste Vorrichtung (1) kommunizierten zeitlichen Information (T), von einer oder mehreren der folgenden Prüfungen:
- einer Prüfung (308), ob sich die erste Vorrichtung (1) in einem Zustand nach erstmaliger Inbetriebnahme, nach einem Batteriewechsel oder sonstigen Stromausfall oder nach einem Reset befindet, wobei bei der Prüfung anhand von Information betreffend eine bereits erfolgte Synchronisation entschieden wird, ob sich die erste Vorrichtung in einem Zustand nach erstmaliger Inbetriebnahme, nach einem Batteriewechsel oder sonstigen Stromausfall oder nach einem Reset befindet,
- einer Prüfung (309), ob eine Abweichung zwischen einer zeitlichen Information (Tₗₒₖₐₗ) einer Uhr (501) der ersten Vorrichtung (1) und der kommunizierten zeitlichen Information (T) kleiner oder kleiner-oder-gleich ist als ein vordefinierter oder nach einer vordefinierten Regel bestimmter Schwellwert (D),
- einer Prüfung, ob die kommunizierte zeitliche Information (T) das gleiche Datum aufweist wie die zeitliche Information (Tₗₒₖₐₗ) der Uhr (501) der ersten Vorrichtung (1),
- Synchronisieren (310) der Uhr (501) der ersten Vorrichtung (1) unter Verwendung der kommunizierten zeitlichen Information (T), falls alle von einer oder mehreren vordefinierten Bedingung(en) erfüllt sind, wobei eine der einen oder mehreren Bedingung(en) erfordert, dass zumindest eine der einen oder mehreren durchgeführten Prüfung(en) ein positives Ergebnis ergeben hat, wobei die eine oder die mehreren durchgeführte(n) Prüfung(en) zumindest die Prüfung, ob sich die erste Vorrichtung (1) in einem Zustand nach erstmaliger Inbetriebnahme, nach einem Batteriewechsel oder sonstigen Stromausfall oder nach einem Reset befindet, umfasst.

2. Verfahren nach Anspruch 1, ferner umfassend:
te
- Erhalten von an die erste Vorrichtung (1) kommunizierter Zugangsberechtigungsinformation (B), die zumindest einen Zugangsberechtigungsparameter umfasst, der einen Zeitraum definiert, innerhalb dessen die Zugangsberechtigungsinformation zum Zugang an der ersten Vorrichtung (1) oder an einer von dieser kontrollierten Vorrichtung (69) berechtigt, und
- Entscheiden, ob Zugang gewährt werden darf, wobei notwendige Bedingung zur Gewährung des Zugangs ist, dass eine Prüfung ergibt, dass die zeitliche Information (Tₗₒₖₐₗ) der Uhr (501) der ersten Vorrichtung (1) in dem von dem zumindest einen Zugangsberechtigungsparameter definierten Zeitraum liegt.

3. Verfahren nach Anspruch 2, wobei die kommunizierte Zugangsberechtigungsinformation (B) ferner einen Zugangsberechtigungsparameter umfasst, der angibt, ob eine Synchronisation der Uhr (501) der ersten Vorrichtung (1) vorgenommen werden darf oder nicht, und wobei eine weitere der einen oder mehreren Bedingung(en) erfordert, dass der Zugangsberechtigungsparameter angibt, dass eine Synchronisation der Uhr (501) der ersten Vorrichtung (1) vorgenommen werden darf.

4. Verfahren nach einem der Ansprüche 2-3, wobei das Synchronisieren der Uhr (501) der ersten Vorrichtung (1) vor der Prüfung, ob die zeitliche Information (Tₗₒₖₐₗ) der Uhr (501) der ersten Vorrichtung (1) in dem von dem zumindest einen Zugangsberechtigungsparameter definierten Zeitraum liegt, stattfindet.

5. Verfahren nach einem der Ansprüche 1-4, ferner umfassend:
- Erhalten von an die erste Vorrichtung (1) kommunizierter Zugangsberechtigungsinformation (B), die zumindest einen Zugangsberechtigungsparameter umfasst, der angibt, ob eine Synchronisation der Uhr (501) der ersten Vorrichtung (1) vorgenommen werden darf oder nicht, und wobei eine weitere der einen oder mehreren Bedingung(en) erfordert, dass der Zugangsberechtigungsparameter angibt, dass eine Synchronisation der Uhr (501) der ersten Vorrichtung (1) vorgenommen werden darf.

6. Verfahren nach einem der Ansprüche 1-5, ferner umfassend:
- Erhalten von an die erste Vorrichtung (1) kommunizierter Zugangsberechtigungsinformation (B), die zumindest einen Zugangsberechtigungsparameter umfasst, der einen Zeitraum definiert, wobei eine weitere der einen oder mehreren Bedingung(en) erfordert, dass die kommunizierte zeitliche Information (T) innerhalb des Zeitraums liegt.

7. Verfahren nach einem der Ansprüche 1-6, wobei die Uhr (501) der ersten Vorrichtung (1) bei erstmaliger Inbetriebnahme, nach einen Batteriewechsel oder sonstigen Stromausfall oder nach einem Reset automatisch auf einen vordefinierten Zeitpunkt, den Zeitpunkt der letzten Synchronisation oder einen anderen in der ersten Vorrichtung (1) gespeicherten Zeitpunkt eingestellt wird und ab diesem zu laufen beginnt.

8. Verfahren nach einem der Ansprüche 1-7, wobei bei der Prüfung, ob sich die erste Vorrichtung (1) in einem Zustand nach erstmaliger Inbetriebnahme, nach einem Batteriewechsel oder sonstigem Stromausfall oder nach einem Reset befindet, ferner geprüft wird (309), ob die kommunizierte zeitliche Information (T) später ist als eine zeitliche Information (Tₗₒₖₐₗ) der Uhr (501) der ersten Vorrichtung (1) oder als die zeitliche Information (T) der Uhr (501) der ersten Vorrichtung (1) abzüglich eines vordefinierten oder nach einer vordefinierten Regel bestimmten Schwellwerts (D), und wobei ein positives Ergebnis dieser Prüfung lediglich vorliegt, wenn festgestellt wird, dass sich die Vorrichtung (1) in einem Zustand nach erstmaliger Inbetriebnahme, nach einem Batteriewechsel oder sonstigen Stromausfall oder nach einem Reset befindet und die kommunizierte zeitliche Information (T) später ist als die zeitliche Information (Tₗₒₖₐₗ) der Uhr (501) der ersten Vorrichtung (1) oder als die zeitliche Information (T) der Uhr (501) der ersten Vorrichtung (1) abzüglich des Schwellwerts (D).

9. Verfahren nach einem der Ansprüche 1-8, wobei die erste Vorrichtung (1) den Zugang zu einem Behälter, insbesondere einem Paketkasten (69) kontrolliert.

10. Verfahren nach einem der Ansprüche 1-9, wobei durch eine Prüfung, ob die Information betreffend eine bereits erfolgte Synchronisation in der ersten Vorrichtung gespeichert ist, entschieden wird, ob sich die erste Vorrichtung in einem Zustand nach erstmaliger Inbetriebnahme, nach einem Batteriewechsel oder sonstigen Stromausfall oder nach einem Reset befindet.

11. Verfahren nach einem der Ansprüche 1-10, wobei die Information betreffend eine bereits erfolgte Synchronisation bei erstmaliger Inbetriebnahme noch nicht in der ersten Vorrichtung gespeichert ist und/oder nach Ereignissen wie einem Batteriewechsel oder sonstigem Stromausfall oder einem Reset in der ersten Vorrichtung gelöscht wird, selbst wenn sie vorhanden war.

12. Verfahren nach einem der Ansprüche 1-11, wobei es sich bei der Information betreffend eine bereits erfolgte Synchronisation um ein gesetztes Bit handelt, das anzeigt, dass zumindest eine Synchronisation bereits erfolgt ist, oder um eine ausführlichere Information, die insbesondere die Anzahl der bereits erfolgten Synchronisationen zählt und/oder Informationen zu der jeweiligen Synchronisation, insbesondere mit Zeitstempel, abspeichert

13. Verfahren nach einem der Ansprüche 1-12, wobei die zeitliche Information (T) aus einer Uhr einer zweiten Vorrichtung (2) gewonnen und drahtlos an die erste Vorrichtung (1) kommuniziert wird.

14. Erste Vorrichtung (1), eingerichtet zur Ausführung und/oder Steuerung des Verfahrens nach einem der Ansprüche 1-13 oder umfassend jeweilige Mittel zur Ausführung und/oder Steuerung der Schritte des Verfahrens nach einem der Ansprüche 1-13.

15. Computerprogramm, umfassend Programmanweisungen, die einen Prozessor (50) zur Ausführung und/oder Steuerung des Verfahrens gemäß einem der Ansprüche 1 bis 13 veranlassen, wenn das Computerprogramm auf dem Prozessor (50) läuft.

## Claims

1. A method, performed by a first apparatus (1), the method comprising:
- obtaining (301) temporal information (T) communicated to the first apparatus (1), and
- performing, after the obtaining of the temporal information (T) communicated to the first apparatus (1), one or more of the following checks:
- a check (308) to determine whether the first apparatus (1) is in a state after initial startup, after a battery change or other power failure or after a reset, wherein, in the check, it is decided based on information relating to a synchronization that has already taken place, if the first apparatus is in the state after initial startup, after a battery change or other power failure or after a reset,
- a check (309) to determine whether a deviation between temporal information (T_{local}) from a clock (501) of the first apparatus (1) and the communicated temporal information (T) is less than or less-than-or-equal to a threshold value (D) that is predefined or determined according to a predefined rule,
- a check to determine whether the communicated temporal information (T) has the same date as the temporal information (T_{local}) from the clock (501) of the first apparatus (1),
- synchronizing (310) the clock (501) of the first apparatus (1) using the communicated temporal information (T) if all of one or more predefined conditions are satisfied, wherein one of the one or more conditions requires that at least one of the one or more performed check(s) has yielded a positive result, wherein the one or more performed check(s) at least comprise the check to determine whether the first apparatus (1) is in a state after initial startup, after a battery change or other power failure or after a reset

2. The method as claimed in claim 1, further comprising:
- obtaining access authorization information (B) communicated to the first apparatus (1) and comprising at least one access authorization parameter that defines a period within which the access authorization information authorizes access to the first apparatus (1) or to an apparatus (69) controlled by the latter, and
- deciding whether access can be granted, wherein a necessary condition for the granting of access is that a check yields that the temporal information (T_{local}) from the clock (501) of the first apparatus (1) lies in the period defined by the at least one access authorization parameter.

3. The method as claimed in claim 2, wherein the communicated access authorization information (B) further comprises an access authorization parameter that indicates whether or not synchronization of the clock (501) of the first apparatus (1) can be performed, and wherein a further one of the one or more condition(s) requires that the access authorization parameter indicates that synchronization of the clock (501) of the first apparatus (1) can be performed.

4. The method as claimed in any one of claims 2-3, wherein the synchronization of the clock (501) of the first apparatus (1) takes place before the check that determines whether the temporal information (T_{local}) from the clock (501) of the first apparatus (1) lies in the period defined by the at least one access authorization parameter.

5. The method as claimed in any one of claims 1-4, further comprising:
- obtaining access authorization information (B) communicated to the first apparatus (1) and comprising at least one access authorization parameter that indicates whether or not synchronization of the clock (501) of the first apparatus (1) can be performed, and wherein a further one of the one or more condition(s) requires that the access authorization parameter indicates that synchronization of the clock (501) of the first apparatus (1) can be performed.

6. The method as claimed in any one of claims 1-5, further comprising:
- obtaining access authorization information (B) communicated to the first apparatus (1) and comprising at least one access authorization parameter that defines a period, wherein a further one of the one or more condition(s) requires that the communicated temporal information (T) lies within the period.

7. The method as claimed in any one of claims 1-6, wherein the clock (501) of the first apparatus (1) is automatically set to a predefined time, the time of the last synchronization or another time stored in the first apparatus (1) upon initial startup, after a battery change or other power failure or after a reset, and begins to run from said time.

8. The method as claimed in any one of claims 1-7, wherein the check that determines whether the first apparatus (1) is in a state after initial startup, after a battery change or other power failure or after a reset further involves checking (309) whether the communicated temporal information (T) is later than temporal information (T_{local}) from the clock (501) of the first apparatus (1) or than the temporal information (T) from the clock (501) of the first apparatus (1) minus a threshold value (D) that is predefined or determined according to a predefined rule, and wherein a positive result of this check is obtained only if it is determined that the apparatus (1) is in a state after initial startup, after a battery change or other power failure or after a reset and the communicated temporal information (T) is later than the temporal information (T_{local}) from the clock (501) of the first apparatus (1) or than the temporal information (T) from the clock (501) of the first apparatus (1) minus the threshold value (D).

9. The method as claimed in any one of claims 1-8, wherein the first apparatus (1) controls access to a container, in particular to a parcel box (69).

10. The method as claimed in any of claims 1-9, wherein it is decided by a check whether the information relating to a synchronization that has already taken place is stored in the first apparatus, whether the first apparatus is in a state after initial startup, after a battery change or other power failure or after a reset

11. The method as claimed in any one of claims 1-10, wherein the information relating to a synchronization that has already taken place is not yet stored in the first apparatus on initial startup and/or is erased even it was present, after events such as a battery change or other power failure or reset in the first apparatus.

12. The method as claimed in any one of claims 1-11, wherein the information relating to a synchronization that has already taken place is a set bit which indicates, that at least one synchronization has already taken place, or is a more detailed information, which in particular counts the number of synchronizations that have already taken place and/or stores information pertaining to the respective synchronization, in particular with a timestamp.

13. The method as claimed in any one of claims 1-12, wherein the temporal information (T) is obtained from a clock of a second apparatus (2) and wirelessly communicated to the first apparatus (1).

14. A first apparatus (1), configured to perform and/or control the method as claimed in any one of claims 1-13 or comprising respective means for performing and/or controlling the steps of the method as claimed in any one of claims 1-13.

15. A computer program, comprising program instructions that cause a processor (50) to perform and/or control the method as claimed in any one of claims 1 to 13 when the computer program runs on the processor (50).

## Revendications

1. Procédé mis en œuvre par un premier dispositif (1), le procédé comprenant :
- l'obtention (301) d'une information de temps (T) communiquée au premier dispositif (1), et
- la réalisation, après l'obtention de l'information de temps (T) communiquée au premier dispositif (1), d'une ou plusieurs des vérifications suivantes :
- d'une vérification (308) si le premier dispositif (1) se trouve dans un état après une première mise en service, après un changement de batterie ou une autre panne de courant ou après une réinitialisation, dans lequel, lors de la vérification, on décide à l'aide d'une information concernant une synchronisation ayant déjà eu lieu si le premier dispositif se trouve dans un état après une première mise en service, après un changement de batterie ou une autre panne de courant ou après une réinitialisation,
- d'une vérification (309) si un écart entre une information de temps (Tₗₒₖₐₗ) d'une horloge (501) du premier dispositif (1) et l'information de temps (T) communiquée est inférieur, ou inférieur ou égal à une valeur de seuil (D) prédéfinie ou définie d'après une règle prédéfinie,
- d'une vérification si l'information de temps (T) communiquée présente la même date que l'information de temps (Tₗₒₖₐₗ) de l'horloge (501) du premier dispositif (1),
- la synchronisation (310) de l'horloge (501) du premier dispositif (1) en utilisant l'information de temps (T) communiquée si toutes d'une ou plusieurs condition(s) prédéfinie(s) sont remplies, dans lequel une parmi l'une ou plusieurs condition(s) exige qu'au moins une parmi l'une ou plusieurs vérification(s) réalisée(s) a donné un résultat positif, dans lequel l'une ou les plusieurs vérification(s) réalisée(s) comprennent au moins la vérification si le premier dispositif (1) se trouve dans un état après une première mise en service, après un changement de batterie ou une autre panne de courant ou après une réinitialisation.

2. Procédé selon la revendication 1, comprenant en outre :
- l'obtention d'une information de droit d'accès (B) communiquée au premier dispositif (1), laquelle comprend au moins un paramètre de droit d'accès qui définit un intervalle de temps dans lequel l'information de droit d'accès autorise l'accès au premier dispositif (1) ou à un dispositif (69) contrôlé par celui-ci, et
- la décision si l'accès peut être accordé, dans lequel une condition nécessaire pour accorder l'accès réside en ce qu'une vérification a pour résultat que l'information de temps (Tₗₒₖₐₗ) de l'horloge (501) du premier dispositif (1) se situe dans l'intervalle de temps défini par l'au moins un paramètre de droit d'accès.

3. Procédé selon la revendication 2, dans lequel l'information de droit d'accès (B) communiquée comprend en outre un paramètre de droit d'accès qui indique si l'on a le droit ou non de réaliser une synchronisation de l'horloge (501) du premier dispositif (1), et dans lequel une autre parmi l'une ou plusieurs condition(s) exige que le paramètre de droit d'accès indique que l'on a le droit de réaliser une synchronisation de l'horloge (501) du premier dispositif (1).

4. Procédé selon l'une des revendications 2-3, dans lequel la synchronisation de l'horloge (501) du premier dispositif (1) a lieu avant la vérification si l'information de temps (Tₗₒₖₐₗ) de l'horloge (501) du premier dispositif (1) se situe dans l'intervalle de temps défini par l'au moins un paramètre de droit d'accès.

5. Procédé selon l'une des revendications 1-4, comprenant en outre :
- l'obtention d'une information de droit d'accès (B) communiquée au premier dispositif (1), laquelle comprend au moins un paramètre de droit d'accès qui indique si l'on a le droit ou non de réaliser une synchronisation de l'horloge (501) du premier dispositif (1), et dans lequel une autre parmi l'une ou plusieurs condition(s) exige que le paramètre de droit d'accès indique que l'on a le droit de réaliser une synchronisation de l'horloge (501) du premier dispositif (1).

6. Procédé selon l'une des revendications 1-5, comprenant en outre :
- l'obtention d'une information de droit d'accès (B) communiquée au premier dispositif (1), laquelle comprend au moins un paramètre de droit d'accès qui définit un intervalle de temps, dans lequel une autre parmi l'une ou plusieurs condition(s) exige que l'information de temps (T) communiquée se situe dans l'intervalle de temps.

7. Procédé selon l'une des revendications 1-6, dans lequel l'horloge (501) du premier dispositif (1), lors d'une première mise en service, après un changement de batterie ou une autre panne de courant ou après une réinitialisation, est automatiquement réglée à un moment prédéfini, au moment de la dernière synchronisation ou à un autre moment enregistré dans le premier dispositif (1), et commence à se mettre en marche à partir de ce moment.

8. Procédé selon l'une des revendications 1-7, dans lequel, lors de la vérification si le premier dispositif (1) se trouve dans un état après une première mise en service, après un changement de batterie ou une autre panne de courant ou après une réinitialisation, on vérifie (309) en outre si l'information de temps (T) communiquée est postérieure à une information de temps (Tₗₒₖₐₗ) de l'horloge (501) du premier dispositif (1) ou à l'information de temps (T) de l'horloge (501) du premier dispositif (1) sous déduction d'une valeur de seuil (D) prédéfinie ou définie d'après une règle prédéfinie, et dans lequel il y a un résultat positif de cette vérification seulement si l'on constate que le dispositif (1) se trouve dans un état après une première mise en service, après un changement de batterie ou une autre panne de courant ou après une réinitialisation, et l'information de temps (T) communiquée est postérieure à l'information de temps (Tₗₒₖₐₗ) de l'horloge (501) du premier dispositif (1) ou à l'information de temps (T) de l'horloge (501) du premier dispositif (1) sous déduction de la valeur de seuil (D).

9. Procédé selon l'une des revendications 1-8, dans lequel le premier dispositif (1) contrôle l'accès à un contenant, en particulier une boîte à paquets (69).

10. Procédé selon l'une des revendications 1-9, dans lequel on décide grâce à une vérification si l'information concernant une synchronisation ayant déjà eu lieu est enregistrée dans le premier dispositif, si le premier dispositif se trouve dans un état après une première mise en service, après un changement de batterie ou une autre panne de courant ou après une réinitialisation.

11. Procédé selon l'une des revendications 1-10, dans lequel l'information concernant une synchronisation ayant déjà eu lieu en cas d'une première mise en service n'est pas encore enregistrée dans le premier dispositif et/ou est effacée dans le premier dispositif après des événements tels un changement de batterie ou une autre panne de courant ou une réinitialisation, même si elle était présente.

12. Procédé selon l'une des revendications 1-11, dans lequel, concernant l'information au sujet d'une synchronisation ayant déjà eu lieu, il s'agit d'un bit réglé qui indique qu'au moins une synchronisation a déjà eu lieu, ou d'une information plus détaillée qui compte en particulier le nombre de synchronisations ayant déjà eu lieu et/ou enregistre des informations sur la synchronisation respective, en particulier avec un horodatage.

13. Procédé selon l'une des revendications 1-12, dans lequel l'information de temps (T) est obtenue à partir d'une horloge d'un deuxième dispositif (2) et est communiquée sans fil au premier dispositif (1).

14. Premier dispositif (1) institué pour la mise en œuvre et/ou la commande du procédé selon l'une des revendications 1-13 ou comprenant des moyens respectifs pour la mise en œuvre et/ou commande des étapes du procédé selon l'une des revendications 1-13.

15. Programme informatique, comprenant des instructions de programme qui ordonnent à un processeur (50) la mise en œuvre et/ou commande du procédé selon l'une des revendications 1 à 13 lorsque le programme informatique s'exécute sur le processeur (50).
